Europäisches Patentamt

European Patent Office

Office européen des brevets

(19)

(11)  EP 0 753 972 B1

(12)  EUROPÄISCHE PATENTSCHRIFT

(45) Veröffentlichungstag und Bekanntmachung des
Hinweises auf die Patenterteilung:
**02.11.2000  Patentblatt 2000/44**

(51) Int Cl.⁷: **H04N 9/64**, H04N 5/44

(21) Anmeldenummer: **96201858.6**

(22) Anmeldetag: **04.07.1996**

(54) **Verfahren zur Zwischenbild-Interpolation von Farbdifferenzsignalen sowie Schaltungsanordnung zur Durchführung dieses Verfahrens**

Method for interframe interpolating colour difference signals and device for carrying out the method

Procédé d'interpolation intertrame de signaux de différence de couleur et circuit pour la réalisation du procédé

(84) Benannte Vertragsstaaten:
**DE FR GB IT**

(30) Priorität: **13.07.1995  DE 19525531**

(43) Veröffentlichungstag der Anmeldung:
**15.01.1997  Patentblatt 1997/03**

(73) Patentinhaber:
• **Philips Corporate Intellectual Property GmbH
52064 Aachen (DE)**
Benannte Vertragsstaaten:
**DE**
• **Koninklijke Philips Electronics N.V.
5621 BA Eindhoven (NL)**
Benannte Vertragsstaaten:
**FR GB IT**

(72) Erfinder: **Ibenthal, Achim
22335 Hamburg (DE)**

(74) Vertreter: **Peters, Carl Heinrich, Dipl.-Ing.
Philips Corporate Intellectual Property GmbH,
Habsburgerallee 11
52064 Aachen (DE)**

(56) Entgegenhaltungen:
**EP-A- 0 457 393          EP-A- 0 648 047
WO-A-90/15503          WO-A-90/15504**

• **INTERNATIONAL CONFERENCE ON CONSUMER ELECTRONICS - DIGEST OF TECHNI PAPERS, ROSEMONT, JUNE 7 - 9 1995, Nr. CONF. 14, 7.Juni 1995, INSTITUTE OF ELECTRICAL AND ELECTRONICS ENGINEERS, Seite 40/41 XP000547724 HAAN DE G ET AL: "IC FOR MOTION-COMPENSATED 100 HZ WITH SMOOTH-MOTION MOVIE-MODE"**
• **IEEE TRANSACTIONS ON CIRCUITS AND SYSTEMS FOR VIDEO TECHNOLOGY, Bd. 5, Nr. 3, 1.Juni 1995, Seiten 207-217, XP000517124 HAAN DE G ET AL: "AN EVOLUTIONARY ARCHITECTURE FOR MOTION-COMPENSATED 100 HZ TELEVISION"**

**Beschreibung**

Die Erfindung bezieht sich auf ein Verfahren zur Interpolation von im Zeilensprungverfahren übertragenen Farbdifferenzsignalen gemäß dem Oberbegriff des Patentanspruchs 1. Sie bezieht sich weiterhin auf eine Schaltungsanordnung zur Durchführung eines derartigen Verfahrens.

Für die vertikale Formatkonversion, z.B. als sogenannten Zoom, und wahlweise oder zusätzlich die vertikale Aufwärtskonversion der zeitlichen Abtastrate von Fernsehbildern werden Interpolationsfilter benötigt, die den subjektiven Schärfeindruck des Betrachters gegenüber der Originalvorlage nicht sichtbar mindern. Soll beispielsweise eine Verdoppelung der Bildwechselfrequenz erfolgen, haben sich feste Interpolationsmethoden bei bewegten Bildinhalten als unzureichend erwiesen. So ist in der deutschen Patentanmeldung P 40 31 921 oder der europäischen Offenlegungsschrift 0 475 499 eine bewegungskompensative Interpolation insbesondere für das Leuchtdichtesignal der Fernsehbilder beschrieben. Damit soll eine Wahrung des Schärfeeindrucks auch bei bewegten Bildern erreicht werden. Diese Verfahren konzentrieren sich auf das Leuchtdichtesignal, da für einen Schärfeverlust der Farbinformation das menschliche Auge nicht so empfindlich ist, so daß insbesondere aus Gründen der Verringerung des Schaltungsaufwands für die Farbinformation eine einfachere Form der Interpolation bevorzugt worden ist.

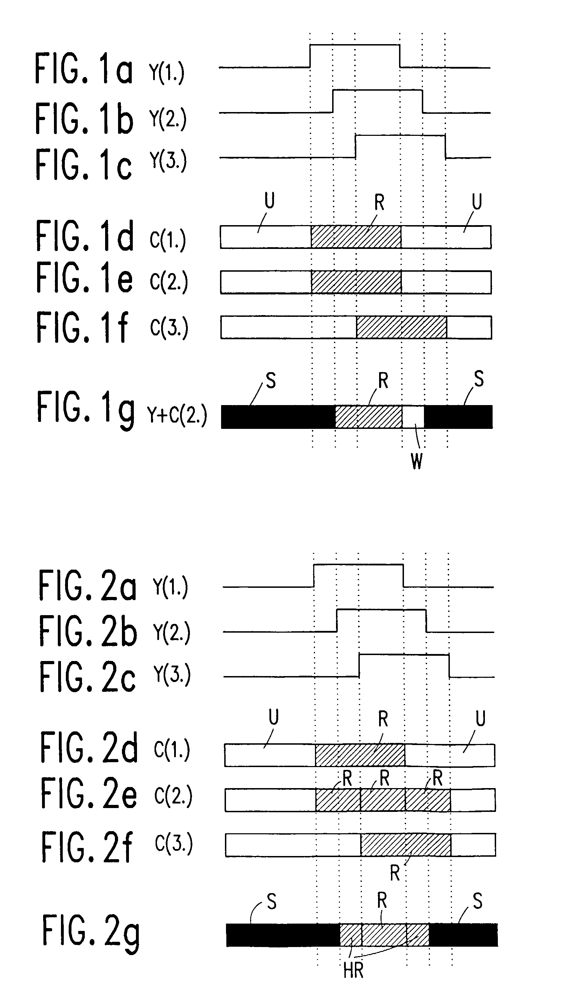

Eine bevorzugte Interpolationsmethode für Farbdifferenzsignale in Fernsehbildern besteht in erster Linie in der Wiederholung von Teilbildern, d.h., daß jedes mit einer niedrigen Abtastrate und einer niedrigen Teilbildwiederholungsfrequenz empfangene Teilbild mit beispielsweise doppelter Abtastrate und Teilbildwiederholungsfrequenz zweifach (bzw. mehrfach) dargestellt wird. Für den Fall, daß auch die Leuchtdichtesignale mit derselben Teilbildwiederholung wiedergegeben werden, erhält man zwar bei der Darstellung der Fernsehbilder Bewegungsartefakte, jedoch keine Farbdefekte, da die örtliche Zugehörigkeit zwischen dem Leuchtdichtesignal und dem Farbsignal auch im Falle von Objektverschiebungen im Bildinhalt identisch ist bzw. bleibt. Im Gegensatz dazu wird jedoch bei Anwendung einer Bewegungskompensation für das Leuchtdichtesignal der Fall nicht auszuschließen sein, daß die Leuchtdichteinformation relativ zur Farbinformation verschoben dargestellt erscheint. Ein Beispiel für eine derart fehlerhafte Bilddarstellung ist in Fig. 1 schematisch wiedergegeben. Darin zeigen die Teilbilder a) und c) einen vereinfachten, beispielhaften Signalverlauf für das Leuchtdichtesignal an einer ausgewählten Stelle in einem ersten Teilbild bzw. in dem anschließend übertragenen Teilbild. Die Verschiebung des rechteckförmigen Verlaufs soll eine Objektbewegung im Bild von einem zum nächsten Teilbild andeuten. Fig. 1b) zeigt demgegenüber das Leuchtdichtesignal Y für ein (zweites) Teilbild, welches aus dem (ersten) Teilbild gemäß Fig. 1a) und dem (dritten) Teilbild gemäß Fig. 1c) durch Verdoppelung der Teilbildwiederholungsfrequenz entsteht, wobei gleichzeitig im Leuchtdichtesignal Y eine Bewegungskompensation vorgenommen wurde. Die zugehörigen Signalverläufe für ein Beispiel eines dem Leuchtdichtesignal zugeordneten Farbsignals sind in den Fig. 1d) bis f) wiedergegeben. Fig. 1d) zeigt als Beispiel das zugehörige Farbsignal C für das erste Teilbild mit einem unbunten Signalwert im Bereich niedriger Signalwerte für das Leuchtdichtesignal Y gemäß Fig. 1a) und entsprechend für einen roten Signalwert im Bereich hoher Werte des Leuchtdichtesignals Y, in Fig. 1 mit den Bezugszeichen U und R bezeichnet. Entsprechendes ist in Fig. 1f) für das dritte Teilbild aufgetragen, und es ist zu erkennen, daß für diese Teilbilder die Abschnitte hoher Leuchtdichtesignalwerte Y deckungsgleich mit den Abschnitten des roten Signalwertes für das Farbsignal C sind. Bei der Wiedergabe des ersten und des dritten Teilbildes entstehen somit keine Fehler.

Das Farbsignal C für das zweite, interpolierte Teilbild gemäß Fig. 1e) wird hier durch einfache Teilbildwiederholung gebildet und entspricht somit dem Farbsignal gemäß Fig. 1d) für das erste Teilbild. Ein Vergleich mit Fig. 1b) zeigt, daß jetzt Leuchtdichtesignal Y und Farbsignal C nicht mehr deckungsgleich sind. Fig. 1g) zeigt für das zweite, interpolierte Teilbild den Bildeindruck. Darin sind schwarze Bildteile S, rote Bildteile mit R und weiße Bildteile mit W symbolisiert. Es ist erkennbar, daß in den Bildbereichen, in denen ein hohes Leuchtdichtesignal Y, jedoch kein Farbsignal C auftritt, ein weißer Bildeindruck entsteht. Im zeitlich interpolierten Zwischenbild, d.h. dem zweiten Teilbild gemäß Fig. 1b) und e), erhält die in Bewegungsrichtung liegende Kante eines im Bild dargestellten Objektes in einer Breite proportional zur Verschiebung des Objektes die Hintergrund- und nicht die Objektfarbe, was zu einem sehr störenden Bildeindruck führt.

Aus der WO-A-90/15504 ist eine Schaltungsanordnung zum Verringern des Zeilen- und Kantenflimmers bei Fernsehbildern, die als Folge von Abtastwerten im Zeilensprungverfahren und mit einer gegenüber einem Eingangssignal verdoppelten Teilbildwiederholungsfrequenz dargestellt werden, bekannt. Diese Schaltungsanordnung benötigt zwei Teilbildspeicher. Durch adaptiv wirkende vertikalzeitliche Medianfilterung werden die substituierenden Teilbilder berechnet. Der Einsatzbereich dieses Filters ist durch einen Frequenzdetektor auf einen horizontalen Frequenzbereich unterhalb eines Drittels der Abtastfolgefrequenz beschränkt. Außerhalb dieses Bereichs wird ein linear interpoliertes Signal substituiert. Die Umschaltung zwischen Medianfilterung und Interpolation wird über eine Kennlinie gesteuert.

Die Erfindung hat die Aufgabe, ein Verfahren zur Interpolation von Farbdifferenzsignalen sowie eine Schaltungsanordnung zur Durchführung dieses Verfahrens zu schaffen, womit die beschriebenen Fehler im Farbsignal bei bewegungskompensiertem Leuchtdichtesignal ohne Schärfeverlust vermieden werden.

Diese Aufgabe wird erfindungsgemäß mit einem Verfahren der eingangs genannten Art gelöst, bei dem

- ein mit einer ersten Teilbildwiederholfrequenz zugeführtes erstes Farbdifferenzsignal durch Teilbildwiederholung in ein zweites Farbdifferenzsignal mit einer gegenüber der ersten Teilbildwiederholfrequenz verdoppelten zweiten Teilbildwiederholfrequenz überführt wird,
- durch zeitliche Mittelung jeweils zweier aufeinanderfolgender Teilbilder aus dem zweiten Farbdifferenzsignal ein drittes, zeitlich gemitteltes Farbdifferenzsignal erzeugt wird,
- durch örtlich hochaufgelöste Interpolation jeweils zweier aufeinanderfolgender Teilbilder aus dem zweiten Farbdifferenzsignal ein viertes, örtlich hochaufgelöstes Farbdifferenzsignal erzeugt wird,
- ein fünftes auszugebendes Farbdifferenzsignal als Linearkombination des dritten und des vierten Farbdifferenzsignals mit bezüglich einer Konstanten zueinander komplementären Koeffizienten gebildet wird und
- die Koeffizienten nach Maßgabe einer aus einem durch die Farbdifferenzsignale darstellbaren Bildinhalt ableitbaren vertikalen Ortsfrequenz oder einer lokalen Bewegungsgeschwindigkeit derart bestimmt werden, daß in der Linearkombination für hohe Bewegungsgeschwindigkeiten bzw. niedrige vertikale Ortsfrequenzen überwiegend das dritte und im umgekehrten Fall überwiegend das vierte Farbdifferenzsignal zur Bildung des fünften Farbdifferenzsignals herangezogen werden.

Der Farbverfälschung an bewegten Objektkanten im Bild kann durch zeitliche Mittelung zweier Teilbilder abgeholfen werden. Eine diesbezügliche schematische Darstellung zeigt Fig. 2, wobei die Bezugszeichen und Symbole denjenigen der Fig. 1 entsprechen. Das Leuchtdichtesignal Y gemäß den Fig. 2a) bis c) stimmt mit dem bewegungskompensierten Leuchtdichtesignal gemäß Fig. 1a) bis c) überein. Demgegenüber wird das Farbsignal C des zweiten Teilbildes gemäß Fig. 2e) durch Mittelung der Farbsignale C des voraufgehenden ersten Teilbildes gemäß Fig. 2d) und des nachfolgenden dritten Teilbildes gemäß Fig. 2f) gebildet. Infolge der bei dieser Mittelung erfolgenden Addition der Farbsignale - im Beispiel nach Fig. 2 rot R und unbunt U - wird neu aufgedeckten sowie von dem bewegten Objekt im Bild neu verdeckten Bereichen des unbunten Hintergrundes ein entsättigtes rot zugeordnet, in Fig. 2e) im vorderen und hinteren, mit rot R gekennzeichneten Signalabschnitt. Als Folge hiervon bewegt sich der geometrische Schwerpunkt der Objektfarbe im interpolierten Zwischenbild (zweites Teilbild) analog zur bewegungskompensierten Luminanz, und die Farbdefekte werden von weiß W gemäß Fig. 1g) zu entsättigtem rot reduziert. Dies ist in Fig. 2g) als Bildeindruck des zweiten Teilbildes in den entsprechenden Signalabschnitten bzw. Bildbereichen als hellrot HR angegeben. In einem Fall, in dem auch der Hintergrund eine Farbe (und nicht nur unbunt wie in Fig. 1 und 2) aufweist, ergibt sich durch die Mischung eine - insbesondere bei komplementären Farben - entsättigte Mischfarbe.

Im allgemeinen läßt sich unter Voraussetzung einer Bewegungskompensation der Leuchtdichtesignale durch zeitliche Mittelung der Farbsignale gemäß Fig. 2 eine bessere Farbwiedergabe von bewegtem Bildinhalt erreichen als durch eine Teilbildwiederholung wie in Fig. 1. Aufgrund des Zeilensprungs bei der Übertragung und Wiedergabe der Bildsignale führt die Mittelung zwischen aufeinanderfolgenden Teilbildern zu einer vertikal/zeitlichen Tiefpaßfilterung, so daß der vertikale Frequenzgang kosinusförmig bedämpft wird. Dies ist insbesondere an statischen horizontalen Farbkanten deutlich sichtbar. Durch die Erfindung wird jedoch ein Verfahren (einschließlich verschiedener Variationsmöglichkeiten) beschrieben, das durch adaptive Umsteuerung der Farbsignalinterpolation eine verbesserte Farbwiedergabe ermöglicht. Bei der Erfindung wird ein Verfahren zur vertikalen Interpolation von Zwischenzeilen (Zoom) mit berücksichtigt. Die Erfindung vermeidet somit Farbdefekte bei bewegungskompensiertem Leuchtdichtesignal, die bei nicht bewegungskompensativer zeitlicher Interpolation des Farbsignals auftreten.

Die Erfindung schafft ferner eine Schaltungsanordnung zum Durchführen des vorstehenden Verfahrens, die die folgenden Schaltungsteile umfaßt:

- einen ersten Teilbildspeicher mit einem Eingang zum Zuleiten des ersten Farbdifferenzsignals und einem Ausgang zum Abgeben des zweiten Farbdifferenzsignals,
- einen zweiten Teilbildspeicher mit einem Eingang, der mit dem Ausgang des ersten Teilbildspeichers verbunden ist, und einem Ausgang zum Abgeben des um die Dauer eines Teilbildes verzögerten zweiten Farbdifferenzsignals,
- einen Zeilenspeicher, dessen Eingang mit dem Ausgang des zweiten Teilbildspeichers verbunden ist und an dessen Ausgang ein zusätzlich um eine Zeilendauer verzögertes zweites Farbdifferenzsignal abgegeben werden kann,
- eine erste Interpolationsschaltung mit drei Eingängen, die mit den Ausgängen des ersten Teilbildspeichers, des zweiten Teilbildspeichers bzw. des Zeilenspeichers verbunden sind, sowie mit einem Ausgang zum Abgeben des dritten Farbdifferenzsignals,
- eine zweite Interpolationsschaltung mit drei Eingängen, die mit den Ausgängen des zweiten Teilbildspeichers, des ersten Teilbildspeichers bzw. des Zeilenspeichers verbunden sind, sowie mit einem Ausgang zum Abgeben des vierten Farbdifferenzsignals,

- eine erste Mischstufe, deren erster Eingang mit dem Ausgang der ersten Interpolationsschaltung und deren zweiter Eingang mit dem Ausgang der zweiten Interpolationsschaltung verbunden ist und an deren Ausgang das fünfte Farbdifferenzsignal abgegriffen werden kann,
- eine erste Steuerstufe zum Steuern der ersten Mischstufe durch Bestimmung der Koeffizienten für die Bildung des fünften Farbdifferenzsignals und Ausgeben eines entsprechenden Koeffizientensignals.

In der erfindungsgemäßen Schaltungsanordnung dient somit der erste Teilbildspeicher zur Umsetzung der Teilbildwiederholfrequenz, wohingegen der zweite Teilbildspeicher zur Bereitstellung eines um die Dauer eines Teilbildes verzögerten Farbdifferenzsignals (hier des zweiten Farbdifferenzsignals) dient. Entsprechend wird der Zeilenspeicher zur Verzögerung um eine zusätzliche Zeilendauer eingesetzt. Anstelle der genannten Speicher können somit auch funktional gleichwertige Verzögerungsanordnungen eingesetzt werden. Dabei kann außerdem eine zusätzliche Verzögerung eingefügt werden, durch die Laufzeitunterschiede in der Signalverarbeitung des Leuchtdichtesignals einerseits und des Farbsignals andererseits ausgeglichen werden können.

Durch das erfindungsgemäße Verfahren und die erfindungsgemäße Schaltungsanordnung zu dessen Durchführung wird entweder abhängig von der vertikalen Ortsfrequenz der Farbdifferenzsignale oder abhängig von der lokalen Bewegungsgeschwindigkeit im Bildinhalt eine Umsteuerung zwischen hoher vertikaler Ortsauflösung und zeitlicher Mittelung durchgeführt. Dabei stellen die beiden Teilbildspeicher zwei zeitlich benachbarte Teilbilder zur Verfügung. Die zu bearbeitenden Farbdifferenzsignale können zeitsequentiell verschachtelt oder auch parallel zur Verarbeitung anstehen. Die erste Interpolationsschaltung dient dabei zur zeitlichen Mittelung jeweils zweier aufeinanderfolgender Teilbilder aus dem zweiten Farbdifferenzsignal und erzeugt das dritte, zeitlich gemittelte Farbdifferenzsignal. Bei dieser Mittelung der einzelnen Zeilen der aufeinanderfolgenden Teilbilder tragen die Signale aus beiden Teilbildern zu jeweils 50 % zum dritten Farbdifferenzsignal bei. Die zweite Interpolationsschaltung dient zur vertikal-örtlich hochaufgelösten Interpolation von Zwischenzeilen. Dabei wird aus jeweils zwei aufeinanderfolgenden Teilbildern des zweiten Farbdifferenzsignals das vierte, örtlich hochaufgelöste Farbdifferenzsignal erzeugt.

In einer vorteilhaften Ausbildung des erfindungsgemäßen Verfahrens und der Schaltungsanordnung zu seiner Durchführung wird dazu zur Bildung des dritten Farbdifferenzsignals bildpunktweise das zweite Farbdifferenzsignal aus zwei oder drei in der Bilddarstellung örtlich benachbarten Bildzeilen von jeweils zwei aufeinanderfolgenden Teilbildern mit für jedes Teilbild gleicher Gewichtung überlagert. Dazu umfaßt die erste Interpolationsschaltung bevorzugt

- eine erste Multiplikationsstufe, durch die ein ihrem Eingang zugeführtes Signal mit dem Faktor 0,5 multipliziert am Ausgang der ersten Interpolationsschaltung verfügbar ist,
- eine erste Additionsstufe, deren Ausgang mit dem Eingang der ersten Multiplikationsstufe verbunden ist, deren erster Eingang den ersten Eingang der ersten Interpolationsschaltung bildet und deren zweitem Eingang das zweite Farbdifferenzsignal vom zweiten oder vom dritten Eingang der ersten Interpolationsschaltung oder ein Mittelwert dieser beiden Signale zuleitbar ist.

Insbesondere kann dabei der Mittelwert der Werte des zweiten Farbdifferenzsignals vom zweiten und vom dritten Eingang der ersten Interpolationsschaltung durch eine zweite Additionsstufe und eine zweite Multiplikationsstufe erzeugt werden, durch die die genannten Werte zunächst additiv überlagert und dann deren Summe mit dem Faktor 0,5 multipliziert werden.

In einer anderen Ausgestaltung des erfindungsgemäßen Verfahrens und der Schaltungsanordnung zu seiner Durchführung wird zur Bildung des vierten Farbdifferenzsignals bildpunktweise eine Medianfilterung des zweiten Farbdifferenzsignals aus drei in der Bilddarstellung örtlich benachbarten Bildzeilen von jeweils zwei aufeinanderfolgenden Teilbildern durchgeführt. Dazu umfaßt die zweite Interpolationsschaltung insbesondere

- ein Medianfilter, dessen Eingänge von den Eingängen der zweiten Interpolationsschaltung gebildet sind und das zum Abgeben des jeweils mittleren der drei seinen Eingängen aktuell zugeführten Signalwerte an seinem Ausgang eingerichtet ist,
- eine erste Umschaltstufe zum wahlweisen Durchschalten des zweiten Farbdifferenzsignals vom Ausgang des Zeilenspeichers oder vom Ausgang des zweiten Teilbildspeichers an einen Ausgang der ersten Umschaltstufe,
- eine zweite Mischstufe, deren erster Eingang mit dem Ausgang des Medianfilters und deren zweiter Eingang mit dem Ausgang der ersten Umschaltstufe verbunden ist und deren Ausgang das vierte Farbdifferenzsignal entnehmbar ist, und
- eine zweite Steuerstufe zum Steuern der zweiten Mischstufe durch Bestimmung der Koeffizienten für die Bildung des vierten Farbdifferenzsignals.

Die zweite Interpolationsschaltung dient zur vertikal-örtlich hochaufgelösten Interpolation von Zwischenzeilen. In der bevorzugten Ausführungsform wird dazu eine Medianfilterung herangezogen. Das Medianfilter hat hier prinzipiell den Vorteil, daß es bei bewegten Bildinhalten selbsttätig in eine Betriebsart entsprechend der Teilbildwiederholung übergeht, so daß größere Artefakte vermieden werden.

Eine weitere Fortbildung der örtlich hochaufgelösten Interpolation des erfindungsgemäßen Verfahrens zeichnet sich dadurch aus, daß ein aus der Medianfilterung erhaltenes Signal zur Gewinnung des vierten Farbdifferenzsignals mit dem Signal wahlweise einer der beiden aus demselben Teilbild entnommenen Bildzeilen linear kombiniert wird, wobei die Gewichtung in dieser Linearkombination bildzeilen- und teilbildabhängig durch einen Bildformatfaktor bestimmt wird, gemäß dem eine vertikale Formatkonversion zwischen den mit dem ersten und dem vierten Farbdifferenzsignal darzustellenden Bildern vorgenommen werden soll.

Mit dieser Ausbildung des erfindungsgemäßen Verfahrens kann zusätzlich zur Verdoppelung der Teilbildwiederholfrequenz auch eine Veränderung des Bildformats, insbesondere eine Bildvergrößerung oder Bildausschnittsvergrößerung (Zoom) berücksichtigt werden. Bei einer Bildformatänderung werden die Zeilen des mit dem fünften Farbdifferenzsignals darzustellenden Bildes abhängig vom vertikalen Bildformatfaktor (im weiteren als Zoomfaktor bezeichnet) an einer beliebigen vertikalen Position zwischen den Zeilen der Teilbilder des zweiten Farbdifferenzsignals zu liegen kommen. Entsprechend dem Zoomfaktor wird für die Darstellung des formatkonvertierten Bildes eine vertikale Steuersequenz ermittelt. Durch diese Steuersequenz wird diejenige Zeile aus dem jeweils zweiten der für die Interpolation gerade herangezogenen Teilbilder bestimmt, die der zu interpolierenden Zeile am nächsten ist, und es wird ein Gewichtungsfaktor C1 für die mittlere Zeile B' festgelegt, die sich jeweils aus der Medianfilterung ergibt. Zur Bildung des vierten Farbdifferenzsignals erfolgt dann eine lineare Gewichtung gemäß der Formel

$$E = C1 \cdot B' + (1-C1) \cdot DIR,$$

wobei E der Signalwert des vierten Farbdifferenzsignals und DIR der Signalwert der Zeile aus dem zweiten Teilbild, die der zu interpolierenden Zeile am nächsten liegt, ist. Dabei ist der Gewichtungsfaktor C1 auf 1 normiert. Gemäß der obigen Beziehung findet also eine exakte geometrische Interpolation statt. Bei den beiden aus demselben Teilbild entnommenen Bildzeilen handelt es sich um die beiden äußeren der drei in der Bilddarstellung örtlich benachbarten Bildzeilen von jeweils zwei aufeinanderfolgenden Teilbildern.

In einer weiteren Fortbildung der örtlich hochaufgelösten Interpolation wird das aus der Medianfilterung erhaltene Signal oder wahlweise für den Fall, daß die beiden Teilbilder aus derselben Bewegungsphase stammen, das Signal der mittleren der drei in der Bilddarstellung örtlich benachbarten Bildzeilen zur Gewinnung des vierten Farbdifferenzsignals herangezogen. Diese Ausgestaltung dient bevorzugt der Berücksichtigung von Fernsehsignalen mit gegenüber der ersten Teilbildwiederholfrequenz halbierter Anzahl von Bewegungsphasen je Zeiteinheit. Derartige Fernsehsignale entstehen beispielsweise beim Abtasten von Kinofilmen. Ist bekannt, daß die beiden Teilbilder eines Vollbildes im Zeilensprungverfahren aus derselben Bewegungsphase stammen, kann das Signal der örtlich mittleren Bildzeile ohne Medianfilterung unmittelbar durchgeschaltet werden.

Eine entsprechende Ausbildung der Schaltungsanordnung zur Durchführung des erfindungsgemäßen Verfahrens weist demgemäß eine von der zweiten Steuerstufe gesteuerte zweite Umschaltstufe zum wahlweisen Durchschalten des zweiten Farbdifferenzsignals vom Ausgang des ersten Teilbildspeichers oder des Signals vom Ausgang des Medianfilters an den ersten Eingang der zweiten Mischstufe auf.

In einer ersten Variation ist das erfindungsgemäße Verfahren derart ausgestaltet, daß zur Abschätzung der vertikalen Ortsfrequenz bildpunktweise der Absolutwert zweier benachbarter Bildzeilen eines Teilbildes bestimmt wird und daß die Werte der für die Bildung des fünften Farbdifferenzsignals aus dem dritten und dem vierten Farbdifferenzsignal verwendeten Koeffizienten aus diesem Absolutwert über eine vorgebbare erste Zuordnungsfunktion festgelegt werden. Dieses Verfahren kann bevorzugt mit einer Schaltungsanordnung ausgeführt werden, in der

- eine erste Subtraktionsstufe mit einem mit dem Eingang des Zeilenspeichers verbundenen Subtrahendeneingang, einem mit dem Ausgang des Zeilen speichers verbundenen Minuendeneingang und einem Differenzausgang,

- eine mit dem Differenzausgang der ersten Subtraktionsstufe verbundene Betragsbildungsstufe zum Bereitstellen des Betragswertes des Signals am Differenzausgang der ersten Subtraktionsstufe, sowie

- eine erste Kennlinienstufe zum Erzeugen des Koeffizientensignals aus dem Betragswert nach Maßgabe der ersten Zuordnungsfunktion.

In einer anderen Ausgestaltung des erfindungsgemäßen Verfahrens werden dagegen die Werte der für die Bildung des fünften Farbdifferenzsignals aus dem dritten und dem vierten Farbdifferenzsignal verwendeten Koeffizienten aus der lokalen Bewegungsgeschwindigkeit über eine vorgebbare zweite Zuordnungsfunktion festgelegt. In einer für die Durchführung dieses Verfahrens besonders geeigneten Schaltungsanordnung umfaßt die erste Steuerstufe

- eine dritte Additionsstufe zum Verknüpfen eines Signals für den Betrag einer horizontalen, lokalen Objektbewegung mit einem Signal für den Betrag einer vertikalen, lokalen Objektbewegung und

- eine zweite Kennlinienstufe zum Erzeugen des Koeffizientensignals aus dem Betragswert nach Maßgabe der zweiten Zuordnungsfunktion.

Bei diesen beiden Variationen des erfindungsgemäßen Verfahrens und der erfindungsgemäßen Schaltungsanordnung findet eine durch die Bildinhalte bestimmte Umsteuerung bzw. lineare Überlagerung des dritten und des vierten Farbdifferenzsignals zum fünften Farbdifferenzsignal statt, wobei unterschiedliche Kriterien für die Bemessung der Umsteuerung bzw. den Mischfaktor für die lineare Überlagerung (Linearkombination) des dritten und des vierten Farbdifferenzsignals herangezogen werden. Die Abschätzung der vertikalen Ortsfrequenz erfolgt über die Bestimmung des Absolutwertes der Differenz zweier benachbarter Bildzeilen eines Teilbildes, die am Eingang und am Ausgang des Zeilenspeichers verfügbar sind. Mit diesen Absolutwerten wird die erste Kennlinienstufe adressiert, die beispielsweise als Festwertspeicher (ROM) ausgebildet sein kann und von der vorgebbare Werte eines Mischungsfaktors MIX an die erste Mischstufe geleitet werden. Der Mischungsfaktor nimmt bevorzugt einen Wert innerhalb eines Wertebereichs zwischen MIX = 1 entsprechend geringer vertikaler Ortsfrequenz und einer ausschließlichen Berücksichtigung des zeitlich gemittelten Farbdifferenzsignals einerseits und MIX = 0 entsprechend hoher vertikaler Ortsfrequenz und damit ausschließlicher Berücksichtigung des örtlich hochaufgelöst interpolierten Farbdifferenzsignals aus der Interpolationsschaltung 2 andererseits ein. Die Umsteuerung bzw. Linearkombination erfolgt bevorzugt gemäß der Formel

$$UV100 = MIX \cdot D + (1-MIX) \cdot E,$$

wobei UV100 der Signalwert des fünften Farbdifferenzsignals und D der Signalwert des dritten Farbdifferenzsignals ist. Der Signalwert UV100 des fünften Farbdifferenzsignals geht also für den Fall bewegungskompensierter Leuchtdichtesignale und geringer Ortsfrequenzen aus einer zeitlichen Mittelung hervor, während bei höheren vertikalen Ortsfrequenzen eine Verwischung horizontaler Kanten umgangen wird. In beiden Fällen werden also Interpolationsmethoden verwendet, die eine jeweils optimale wahrnehmbare Bildqualität bewirken. Dabei kann eine erste Zuordnungsfunktion mit möglichst stetigem, "weichem" Verlauf zur Verhinderung sichtbarer Schaltvorgänge bevorzugt werden.

In der zweiten, vorstehend aufgeführten Variation des erfindungsgemäßen Verfahrens wird die Tatsache ausgenutzt, daß beim Vorhandensein eines bewegungskompensierten Leuchtdichtesignals auch Signale zur Verfügung stehen, die die lokale Objektbewegung beschreiben. Vorzugsweise liegen diese Signale in der Form vor, daß ein erstes dieser Signale - VX - den Betrag der horizontalen Objektbewegung und ein zweites - VY - den Betrag der vertikalen Objektbewegung darstellt. Diese Signale können in unterschiedlicher Weise ausgewertet werden. So kann eine aus ihnen gewonnene Steuergröße durch das Maximum dieser beiden Signale gebildet werden, es kann jedoch auch die Summe der Beträge oder die Summe der Betragsquadrate der horizontalen und vertikalen Objektbewegungen als Steuergröße dienen. In einer bevorzugten Ausführungsform der Schaltungsanordnung zur Durchführung des erfindungsgemäßen Verfahrens wird als Steuergröße die Summe der Beträge in der dritten Additionsstufe gebildet. Die so gewonnene Steuergröße adressiert die zweite Kennlinienstufe, in der über die zweite Zuordnungsfunktion der Wert für das den Mischungsfaktor MIX bildende Koeffizientensignal erzeugt wird. Im allgemeinen kann diese zweite Zuordnungsfunktion von der Wahl der Steuergröße abhängig sein. Im allgemeinen wird bei den genannten Ausbildungen der Steuergröße für große Werte derselben eine Umsteuerung überwiegend zur zeitlichen Mittelung und für kleine Werte der Steuergröße überwiegend zur vertikal-örtlich hochaufgelösten Interpolation angewendet werden.

In denjenigen Teilbildern des fünften Farbdifferenzsignals, in denen keine zeitliche Zwischenbildinterpolation stattfindet, kann zwar grundsätzlich das Farbdifferenzsignal nach den vorbeschriebenen Verfahren gebildet werden. Dabei sollte dann aber kein zeitlich gemittelter Anteil im fünften Farbdifferenzsignal auftreten. Um einen etwaigen schädigenden Einfluß einer zeitlichen Mittelung auf das Signal zu unterbinden, kann diese während der genannten Teilbilder abgeschaltet werden. Eine Schaltungsanordnung zur Durchführung dieses Verfahrens enthält dazu vorzugsweise eine dritte Umschaltstufe zum wahlweisen Zuführen des Koeffizientensignals von der ersten Steuerstufe oder zum Umsteuern der ersten Mischstufe in einen Betriebszustand, in dem das fünfte Farbdifferenzsignal mit dem vierten Farbdifferenzsignal übereinstimmt. Das Koeffizientensignal, d.h. der Mischungsfaktor MIX, wird dann nur noch gezielt in den interpolierten Teilbildern des fünften Farbdifferenzsignals wirksam.

Während die bereits beschriebenen

Fig. 1 und 2 der Erläuterung der Nachteile des Standes der Technik und der Wirkungsweise der Erfindung dienen. zeigt die Zeichnung, in der im übrigen übereinstimmende Elemente mit denselben Bezugszeichen versehen sind, in

Fig. 3 ein Blockschaltbild eines Ausführungsbeispiels einer Schaltungsanordnung zur Durchführung einer ersten Variante des erfindungsgemäßen Verfahrens,

Fig. 4 eine Zuordnungstabelle, aus der sich die Abfolge der Teilbilder bei einem Verfahrensbeispiel nach der Erfindung entnehmen läßt,

Fig. 5 Ausführungsbeispiele für eine erste Interpolationsschaltung,

Fig. 6 ein erstes Ausführungsbeispiel für eine zweite Interpolationsschaltung,

Fig. 7 ein zweites Ausführungsbeispiel der zweiten Interpolationsschaltung,

Fig. 8 eine schematische Darstellung eines Beispiels für eine Zwischenzeileninterpolation durch die zweite Interpolationsschaltung,

Fig. 9 ein Ausführungsbeispiel für eine erste Mischstufe,

Fig. 10 eine Tabelle zur symbolischen Darstellung verschiedener Signale der Schaltungsanordnung nach Fig. 3 für den Fall, daß der Bildformatfaktor (Zoomfaktor) den Wert 4/3 annimmt,

Fig. 11 eine Tabelle für die gleichen Signale wie in Fig. 10, jetzt jedoch für einen Zoomfaktor von 1,

Fig. 12 Interpolationsschemata für die erste und die zweite Interpolationsschaltung bei einem vertikalen Zoomfaktor von 4/3,

Fig. 13 zwei Beispiele f|r den Verlauf der ersten Zuordnungsfunktion,

Fig. 14 zwei weitere Beispiele für den Verlauf der ersten Zuordnungsfunktion,

Fig. 15 eine Tabelle zur schematischen Darstellung der Steuerung der dritten Umschaltstufe im Beispiel nach Fig. 3,

Fig. 16 ein schematisches Blockschaltbild für eine Schaltungsanordnung zur Durchführung einer zweiten Variante des erfindungsgemäßen Verfahrens, wobei auf Fig. 16 auch die Fig. 4, 5, 6, 7, 8, 9, 10, 11, 12 und 15 anwendbar sind, und

Fig. 17 zwei Beispiele für den Verlauf der zweiten Zuordnungsfunktion.

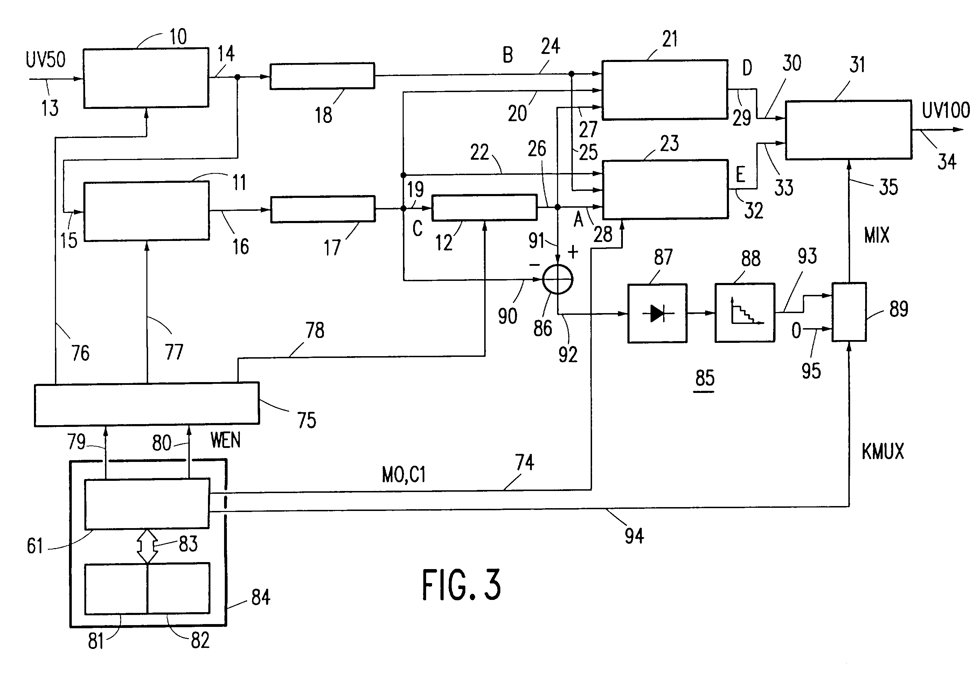

Fig. 3 zeigt eine Schaltungsanordnung zur Durchführung der Variante des erfindungsgemäßen Verfahrens, das abhängig von der vertikalen Ortsfrequenz der Farbdifferenzsignale eine Umsteuerung (bzw. Mischung oder Linearkombination) zwischen hoher vertikaler Ortsauflösung und zeitlicher Mittelung durchführt. Diese Schaltungsanordnung weist einen ersten Teilbildspeicher 10, einen zweiten Teilbildspeicher 11 sowie einen Zeilenspeicher 12 auf. Der erste Teilbildspeicher 10 weist einen Eingang 13 zum Zuleiten des ersten Farbdifferenzsignals UV50 und einen Ausgang 14 zum Abgeben des zweiten Farbdifferenzsignals auf. Der Ausgang 14 des ersten Teilbildspeichers 10 ist mit einem Eingang 15 des zweiten Teilbildspeichers 11 verbunden. Ein Ausgang 16 des zweiten Teilbildspeichers 11 ist zum Abgeben des um die Dauer eines Teilbildes des ersten Farbdifferenzsignals UV 50 verzögerten zweiten Farbdifferenzsignals eingerichtet und über eine erste Laufzeitausgleichsschaltung 17 an einen Eingang 19 des Zeilenspeichers 12 angeschlossen. Mit dem Eingang 19 ist ferner ein zweiter Eingang 20 einer ersten Interpolationsschaltung 21 sowie eine erster Eingang 22 einer zweiten Interpolationsschaltung 23 verbunden. Entsprechend ist der Ausgang 14 des ersten Teilbildspeichers 10 über eine zweite Laufzeitausgleichsschaltung 18 an einen ersten Eingang 24 der ersten Interpolationsschaltung 21 sowie an einen zweiten Eingang 25 der zweiten Interpolationsschaltung 23 angeschlossen. Ein Ausgang 26 des Zeilenspeichers 12 ist mit je einem dritten Eingang 27 bzw. 28 der ersten bzw. der zweiten Interpolationsschaltung 21 bzw. 23 verbunden.

Der Zeilenspeicher 12 liefert an seinem Ausgang 26 ein zusätzlich zu dem zweiten Farbdifferenzsignal an seinem Eingang 19 um eine Zeilendauer verzögertes zweites Farbdifferenzsignal. Die Laufzeitausgleichsschaltungen 17, 18 weisen die gleiche Verzögerungsdauer auf und dienen zur Herstellung eines Laufzeitausgleichs zwischen den Farbdifferenzsignalen und dem Leuchtdichtesignal und könnten im Rahmen der hier beschriebenen Schaltungsanordnung auch dem Eingang 13 des ersten Teilbildspeichers 10 - dann in nur einem Exemplar - vorgeschaltet werden. Da sie das zweite Farbdifferenzsignal in gleicher Weise verzögern, können sie für die folgende Betrachtung unberücksichtigt bleiben.

Ein Ausgang 29 der ersten Interpolationsschaltung 21 dient zum Abgeben des dritten, zeitlich gemittelten Farbdifferenzsignals und ist mit einem ersten Eingang 30 einer ersten Mischstufe 31 verbunden. Ein Ausgang 32 der zweiten Interpolationsschaltung 23 dient zum Abgeben des vierten, örtlich hochaufgelösten Farbdifferenzsignals und ist mit einem zweiten Eingang 33 der ersten Mischstufe 31 verbunden. Ein Ausgang 34 der ersten Mischstufe 31 dient zum Abgeben des fünften Farbdifferenzsignals UV100. In Fig. 3 ist mit B das zweite Farbdifferenzsignal vom Ausgang 14 des ersten Teilbildspeichers 10 (bzw. vom Ausgang der zweiten Laufzeitausgleichsschaltung 18) und mit C das demgegenüber um die Dauer eines Teilbildes des ersten Farbdifferenzsignals UV50 verzögerte zweite Farbdifferenzsignal (bzw. deren Signalwerte) bezeichnet. Entsprechend ist D das dritte Farbdifferenzsignal am Ausgang 29 der ersten Interpolationsschaltung 21 und E das vierte Farbdifferenzsignal am Ausgang 32 der zweiten Interpolationsschaltung 23. In der Bilddarstellung sind die zu einem herausgegriffenen Zeitpunkt dargestellten Zeilen des zweiten Farbdifferenzsignals B und C sowie die Zeile des gegenüber dem zweiten Farbdifferenzsignal C um eine Zeilendauer zusätzlich verzögerten und mit A bezeichneten zweiten Farbdifferenzsignals örtlich benachbart angeordnet. Wenn in einer Abwandlung des Ausführungsbeispiels nach Fig. 3 der zweite Teilbildspeicher 11 einen zweiten Ausgang für ein entsprechend zeitlich verzögertes zweites Farbdifferenzsignal aufweist, kann der Zeilenspeicher 12 entfallen, vorausgesetzt, der Teilbildspeicher 11 ist zumindest zeilenadressierbar, da es vorkommen kann, daß dieselbe Zeile zweimal ausgelesen wird (im Falle eines Zooms).

In der ersten Interpolationsschaltung 21 wird aus den jeweils drei örtlich benachbarten Zeilen des Farbdifferenzsignals - A, B, C - das zeitlich gemittelte dritte Farbdifferenzsignal D gebildet. Bei der Mittelung der Zeilen A, B, C werden Signale aus beiden Teilbildern zu jeweils der Hälfte zum Ausgangssignal D, d.h. dem dritten Farbdifferenzsignal, herangezogen bzw. dafür berücksichtigt. Die gleichen Zeilen - A, B, C, wobei in beiden Fällen A die obere Vollbildzeile, B die mittlere Vollbildzeile und C die untere Vollbildzeile der im Zeilensprungverfahren vorgenommenen Kombination zweier Teilbilder zum Vollbild - werden über die Eingänge 22, 25, 28 auch der zweiten Interpolationsschaltung 23 zugeführt, die daraus das vierte, örtlich hochaufgelöste Farbdifferenzsignal E bildet. Aus den Signalen D und E bildet die erste Mischstufe 31 nach Maßgabe eines ihr über einen Koeffizientensignaleingang 35 zuleitbaren Koeffizientensignals bzw. Mischungsfaktors MIX das fünfte Farbdifferenzsignal UV100 im Sinne einer Überblendung zwischen dem dritten Farbdifferenzsignal D und dem vierten Farbdifferenzsignal E entsprechend dem Wert des Mischungsfaktors MIX.

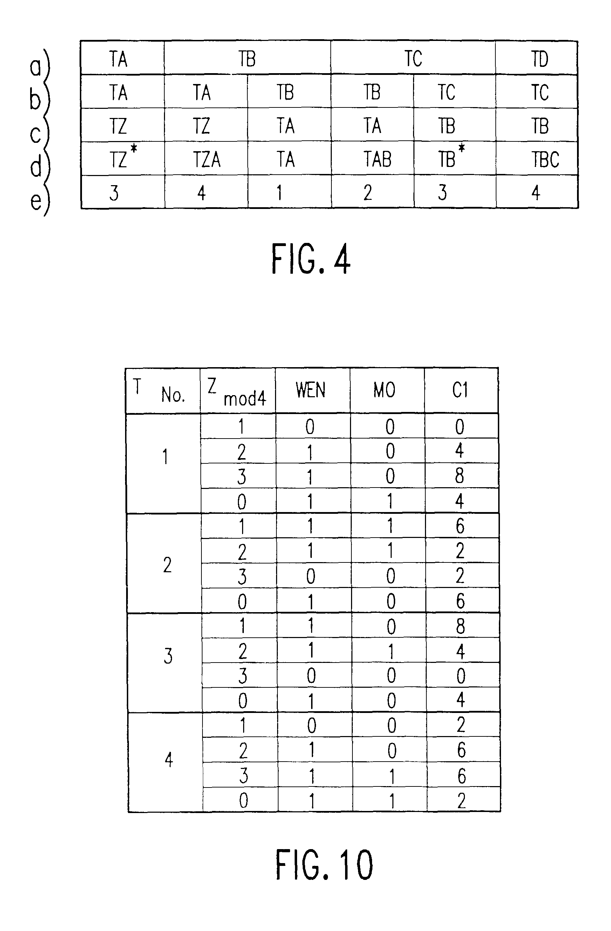

Fig. 4. zeigt in Tabellenform die zeitliche Folge der zu bearbeitenden Bilder bzw. Teilbilder anhand eines Beispiels, bei dem das erste Farbdifferenzsignal UV50 mit einer Teilbildwiederholfrequenz von beispielsweise 50 Hz in ein fünftes Farbdifferenzsignal UV100 mit der doppelten Teilbildwiederholfrequenz - 100 Hz umgewandelt werden soll. Die Zeile a) in Fig. 4 symbolisiert die Abfolge der Teilbilder TA, TB, TC und TD im ersten Farbdifferenzsignal UV50. Die Zeile B in Fig. 4 symbolisiert die zeitliche Lage und Dauer dieser Teilbilder im zweiten Farbdifferenzsignal B (am Ausgang 14 des ersten Teilbildspeichers 10), die Zeile c) in Fig. 4 die entsprechende Teilbildfolge am Ausgang 16 des zweiten Teilbildspeichers 11 (C). Die Zeile d) in Fig. 4 symbolisiert die Interpolation zwischen den einzelnen Teilbildern, die Zeile e) zeigt eine Numerierung der 100 Hz-Teilbilder, die von 1 bis 4 periodisch wiederkehrend läuft, da die Verarbeitung der Farbdifferenzsignale mit der Dauer von vier dieser 100 Hz-Teilbilder periodisch verläuft, d.h. periodisch mit einem Vollbild des ersten Farbdifferenzsignals UV50. Aus der Zeile d) in Fig. 4 ist zu erkennen, daß im ersten und dritten Teilbild keine zeitliche Zwischenbildinterpolation stattfindet; dagegen gehört zu den Teilbildern 2 und 4 im Fall bewegungskompensierter Luminanz und geringer Ortsfrequenzen eine zeitliche Mittelung. Entsprechend werden im ersten und dritten Teilbild in Zeile d) die Signale aus der Zeile c) übernommen, in dem zweiten und vierten Teilbild ist mit den Symbolen TZA, TAB, TBC die beschriebene Mittelung bzw. Interpolation symbolisiert. Der Stern am Symbol beim dritten Teilbild kennzeichnet eine Änderung des Zeilensprungrasters bei der Umwandlung vom zweiten in das fünfte Farbdifferenzsignal.

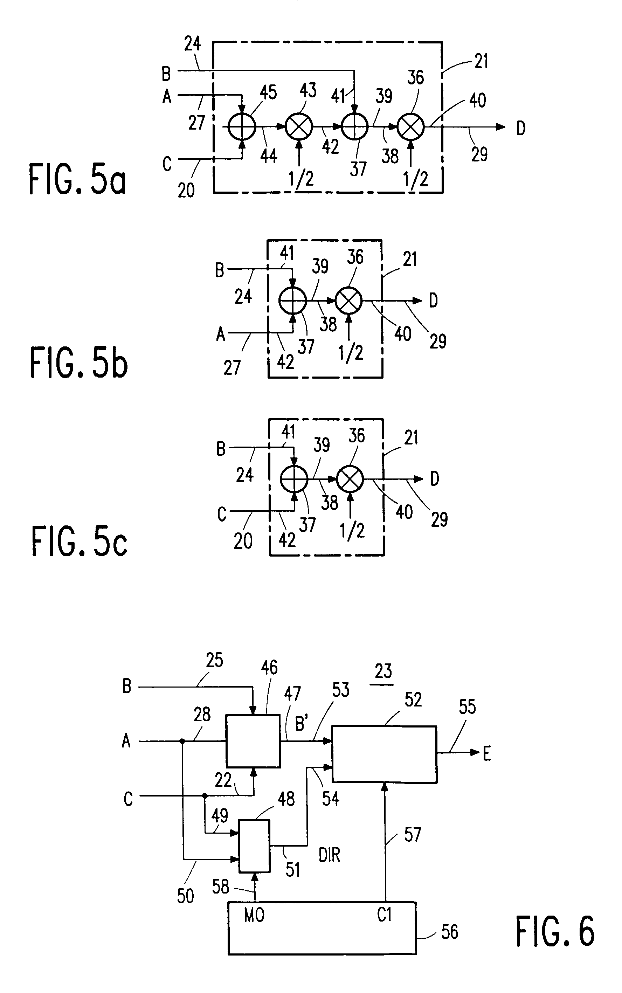

Fig. 5 zeigt drei Ausführungsbeispiele für eine Ausgestaltung der ersten Interpolationsschaltung 21. Allen drei Ausführungsbeispielen a), b) und c) der Fig. 5 ist eine erste Multiplikationsstufe 36 sowie eine erste Additionsstufe 37 gemeinsam. Die erste Multiplikationsstufe 36 multipliziert ein ihrem Eingang 38 vom Ausgang 39 der ersten Additionsstufe 37 zugeführtes Signal mit dem Faktor 0,5 und stellt dieses an ihrem mit dem Ausgang 29 der ersten Interpolationsschaltung 21 verbundenen Ausgang 40 zur Verfügung. Ein erster Eingang 41 der ersten Additionsstufe 37 bildet den ersten Eingang 24 der ersten Interpolationsschaltung 21 und erhält die jeweils mittlere Zeile B der drei zu bearbeitenden Vollbildzeilen A, B, C zugeführt. Ein zweiter Eingang 42 der ersten Additionsstufe 37 ist im Beispiel gemäß Fig. 5a) mit einem Ausgang einer zweiten Multiplikationsstufe 43 verbunden, die ebenfalls ein ihrem Eingang 44 zugeführtes Signal mit dem Faktor 0,5 multipliziert. Der Eingang 44 der zweiten Multiplikationsstufe 43 ist mit dem Ausgang einer zweiten Additionsstufe 45 verbunden, deren Eingänge durch den zweiten und den dritten Eingang 20 bzw. 27 der ersten Interpolationsschaltung 21 gebildet werden. In der ersten Interpolationsschaltung 21 nach Fig. 5a) wird somit zunächst der Mittelwert der Zeilen A und C gebildet, der dann wiederum mit der Zeile B gemittelt wird. Da die Zeilen A und C aus demselben Teilbild stammen, trägt jedes der für die Mittelung herangezogenen Teilbilder zur Hälfte zum dritten Farbdifferenzsignal D am Ausgang 29 der ersten Interpolationsschaltung 21 bei.

Demgegenüber ist in Fig. 5b) der zweite Eingang 42 der ersten Additionsstufe 37 unmittelbar mit dem dritten Eingang 27 der ersten Interpolationsschaltung 21 verbunden, und in Fig. 5c) ist dieser zweite Eingang 42 unmittelbar mit dem zweiten Eingang 20 der ersten Interpolationsschaltung 21 verbunden. Demzufolge wird im Beispiel nach Fig. 5b) nur die Zeile A, im Beispiel nach Fig. 5c) nur die Zeile C zur zeitlichen Mittelung herangezogen. Aus der Gruppe der in der Bilddarstellung örtlich benachbarten drei Zeilen A, B, C wird somit stets die örtlich mittlere - B - aus dem einen der beiden Teilbilder mit wenigstens einer der örtlich oberhalb bzw. unterhalb angeordneten Zeilen - A, C - aus dem anderen Teilbild gemittelt.

Fig. 6 zeigt ein erstes Ausführungsbeispiel für den Aufbau der zweiten Interpolationsschaltung 23. Diese zweite Interpolationsschaltung 23, in der zur Bildung des vierten Farbdifferenzsignals E bildpunktweise eine Medianfilterung des zweiten Farbdifferenzsignals aus den drei in der Bilddarstellung örtlich benachbarten Bildzeilen A, B, C von jeweils zwei aufeinanderfolgenden Teilbildern durchgeführt wird, enthält ein Medianfilter 46, dessen drei Eingänge von den Eingängen 22, 25 und 28 der zweiten Interpolationsschaltung 23 gebildet sind und das zum Abgeben des jeweils mittleren der drei seinen Eingängen 22, 25, 28 aktuell zugeführten Signalwerte C, B bzw. A an seinem Ausgang 47 eingerichtet ist. Dabei bestimmt das Medianfilter als jeweils mittleren Signalwert im Gegensatz zu der vorstehend aufgeführten, örtlich mittleren Anordnung unabhängig von der örtlichen Lage der drei zum jeweiligen Zeitpunkt verglichenen Bildpunkte stets den Bildpunkt, dessen Signalwert der mittlere, d.h. kleiner als der größte und größer als der kleinste der drei zugeführten Signalwerte ist. Dieser Signalwert ist in Fig. 6 mit dem Bezugzeichen B' bezeichnet. Während B stets die örtlich mittlere Zeile der drei jeweils zugeführten Zeilen der beiden gerade bearbeiteten Teilbilder darstellt, kann somit der Signalwert B' auch örtlich am Rande der betrachteten Zeilen liegen.

Die zweite Interpolationsschaltung 23 gemäß Fig. 6 enthält weiterhin eine erste Umschaltstufe 48, die mit je einem ihrer Eingänge 49, 50 mit dem ersten Eingang 22 bzw. dem dritten Eingang 28 der zweiten Interpolationsschaltung 23 verbunden ist. Am Ausgang 51 der ersten Umschaltstufe 48 ist von dieser ein Signal DIR abgebbar. Es handelt sich dabei um den Signalwert derjenigen Zeile, aus dem zweiten der zum jeweiligen Zeitpunkt verarbeiteten Teilbilder, die der zu interpolierenden Zeile örtlich am nächsten liegt. Die erste Umschaltstufe 48 schaltet somit wahlweise die Zeile A oder C als Signal DIR an ihren Ausgang 51 durch.

Die zweite Interpolationsschaltung 23 in Fig. 6 umfaßt weiterhin eine zweite Mischstufe 52, deren erster Eingang 53 mit dem Ausgang 47 des Medianfilters 46 und deren zweiter Eingang 54 mit dem Ausgang 51 der ersten Umschaltstufe 48 verbunden ist und deren Ausgang 55 das vierte Farbdifferenzsignal E entnehmbar ist. Im übrigen entspricht die zweite Mischstufe 52 in Funktion und Aufbau der ersten Mischstufe 31.

Die zweite Interpolationsschaltung 23 nach Fig. 6 umfaßt weiterhin eine zweite Steuerstufe 56, die zum Steuern der zweiten Mischstufe 52 durch Bestimmung der Koeffizienten für die Bildung des vierten Farbdifferenzsignals E, d.h. des Gewichtungsfaktors C1, eingerichtet ist. Dieser wird von der zweiten Steuerstufe 56 über eine Steuerleitung 57 der zweiten Mischstufe 52 zugeführt. Die zweite Steuerstufe 56 erzeugt außerdem an einer weiteren Steuerleitung 58 ein Umschaltsignal MO, welches der ersten Umschaltstufe 48 zum wahlweisen Umschalten eines der beiden Eingänge 49, 50 auf den Ausgang 51 dient.

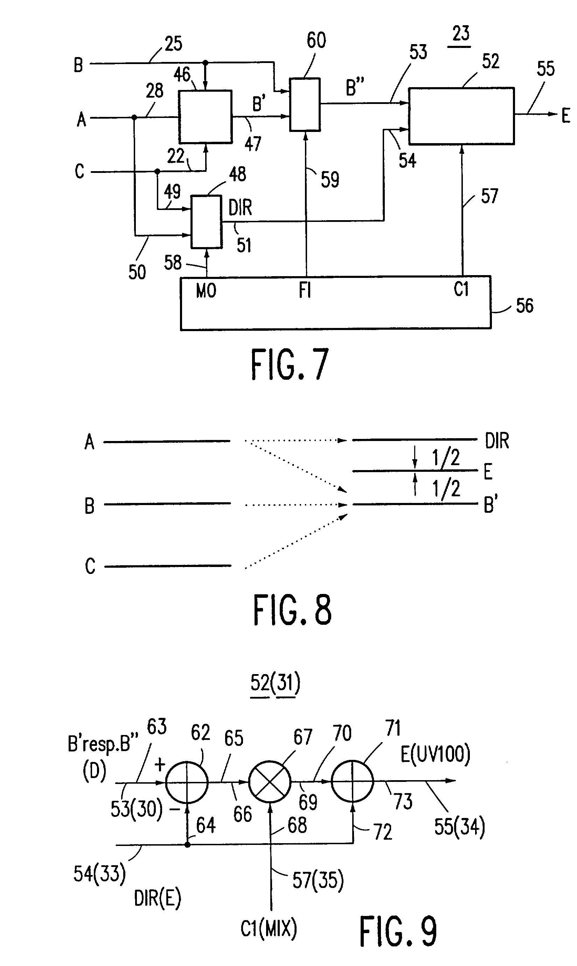

Fig. 7 zeigt eine Abwandlung der zweiten Interpolationsschaltung 23 nach Fig. 6, in der gegenüber letzterer eine über eine dritte Steuerschaltung 59 ebenfalls von der zweiten Steuerstufe 56 gesteuerte zweite Umschaltstufe 60 zum wahlweisen Durchschalten des zweiten Farbdifferenzsignals B vom Ausgang des ersten Teilbildspeichers 10 bzw. vom zweiten Eingang 25 der zweiten Interpolationsschaltung 23 oder des Signals B' vom Ausgang 47 des Medianfilters 46 an den ersten Eingang 53 der zweiten Mischstufe 52 hinzugefügt ist. Das von der zweiten Umschaltstufe 60 dem ersten Eingang 53 der zweiten Mischstufe 52 zugeführte Signal ist jetzt als B'' bezeichnet, das Umschaltsignal auf der dritten Steuerleitung 59 trägt die Bezeichnung FI. Die zweite Umschaltstufe 60 dient in dem Fall, daß die beiden Teilbilder aus derselben Bewegungsphase stammen - beispielsweise bei der Wiedergabe eines Kinofilms - zum direkten Durchschalten des Signals B und damit zur Umgehung der Medianfilterung in diesem Fall.

Eine Zeile des vierten Farbdifferenzsignals E kann nun abhängig vom vertikalen Zoomfaktor bzw. dem vertikalen Bildformatfaktor an einer beliebigen vertikalen Position zwischen den Zeilen A und C liegen. In Fig. 8 ist ein Beispiel dargestellt, in dem die Ausgangszeile (des vierten Farbdifferenzsignals) E in der Mitte zwischen den Zeilen A und B angeordnet ist. Hierzu ermittelt ein Generator, der in Fig. 3 mit dem Bezugszeichen 61 versehen ist, zur Erzeugung einer vertikalen Steuersequenz diejenige Zeile A und C aus dem zweiten Teilbild vom Ausgang 16 des zweiten Teilbildspeichers 11, die der zu interpolierenden Zeile am nächsten ist. Diese wird dann als Signalwert DIR über die erste Umschaltstufe 48 unmittelbar dem zweiten Eingang 54 der zweiten Mischstufe 52 zugeleitet. Außerdem ermittelt der Generator 61 den Gewichtungsfaktor C1 für den Signalwert B' derjenigen Zeile, die sich aus der Medianfilterung ergibt und als mittlere Zeile herangezogen werden soll. Zwischen den Signalwerten DIR und B' findet dann eine lineare Gewichtung bzw. Linearkombination mit dem Gewichtungsfaktor C1 im Sinne einer exakten geometrischen Interpolation statt. Im vorliegenden Beispiel erhält der Gewichtungsfaktor C1 den Wert 0,5, so daß DIR und B' in gleichem Maße zur Bildung des Signalwerts E des vierten Farbdifferenzsignals beitragen.

Fig. 9 zeigt ein Ausführungsbeispiel für den Aufbau der zweiten Mischstufe 52, der mit dem Aufbau der ersten Mischstufe 52, der mit dem Aufbau der ersten Mischstufe 31 identisch ist. Zur Vereinfachung sind die der ersten Mischstufe 31 zuzuordnenden Bezugszeichen in Fig. 9 in Klammern beigefügt. Die zweite (erste) Mischstufe 52 (31) weist eine zweite Subtraktionsstufe 62 auf, deren Minuendeneingang 63 mit dem ersten Eingag 53 (30) der zweiten (ersten) Mischstufe 52 (31) und deren Subtrahendeneingang 64 mit dem zweiten Eingang 54 (33) der zweiten (ersten) Mischstufe 52 (31) verbunden ist. Am Ausgang 65 der zweiten Subtraktionsstufe 62 wird die Differenz der Signale B' respektive B'' (D) und DIR (E) abgegeben und einem ersten Eingang 66 einer dritten Multiplikationsstufe 67 zugeführt. Einem zweiten Eingang 68 der dritte Multiplikationsstufe 67, der mit der Steuerleitung 57 (dem Koeffizientensignaleingang 35) für den Gewichtungsfaktor C1 (den Mischungsfaktor MIX) der zweiten (ersten) Mischstufe 52 (31) verbunden ist, wird der Gewichtungsfaktor C1 (der Mischungsfaktor MIX) zur Multiplikation mit dem Signal am ersten Eingang 66 der dritten Multiplikationsstufe 67 zugeführt. Das Produkt, am Ausgang 69 der dritten Multiplikationsstufe 67 abgegeben, wird einem ersten Eingang 70 einer vierten Additionsstufe 71 zugeführt, der an ihrem mit dem Subtrahendeneingang 64 der zweiten Subtraktionsstufe 62 verbundenen zweiten Eingang 72 das Signal DIR (E) zugeleitet wird. Am Ausgang 73 der vierten Additionsstufe 71, der mit dem Ausgang 55 (34) der zweite (ersten) Mischstufe 52 (31) verbunden ist, kann dann das vierte (fünfte) Farbdifferenzsignal E (UV100) abgegriffen werden. Die Mischstufen nach Fig. 9 sind so konzipiert, daß die Faktoren C1 bzw. MIX auf 1 normiert zugeführt werden.

Gemäß dem vorstehend beschriebenen weist Fig. 3 zwischen dem Generator 61 und der zweiten Interpolationsschaltung 23 eine Steuerverbindung 74 auf, über die der Gewichtungsfaktor C1, das Umschaltsignal MO und ggf. auch das Umschaltsignal FI vom Generator 61 an die zweite Interpolationsschaltung 23 geleitet werden können. Demzufolge übernimmt der Generator 61 in Fig. 3 ganz oder teilweise die Funktion der zweiten Steuerstufe 56 in den Fig. 6 oder 7 mit; die Steuerverbindung 74 faßt die Steuerleitungen 57, 58 und ggf. 59 zusammen.

Fig. 3 zeigt weiterhin eine Speichersteuerung 75, von der Steuerleitungen 76, 77 bzw. 78 an den ersten Teilbildspeicher 10, den zweiten Teilbildspeicher 11 bzw. den Zeilenspeicher 12 geführt sind. Über diese Steuerleitungen 76, 77, 78 übernimmt die Speichersteuerung 75 in an sich bekannter Weise, gesteuert durch aus der Bildübertragung abgeleitete Steuer- und Taktsignale vom Generator 61, das Einschreiben und Auslesen der Farbdifferenzsignale in die genannten Speicher. Dazu ist der Generator 61 weiterhin mit einer (siebten) Steuerleitung 79 an die Speicher steuerung 75 angeschlossen.

Im Falle eines vertikalen Zooms, d.h. einer vertikalen Bildformatveränderung, werden im fünften Farbdifferenzsignal UV100 (und auch im vierten Farbdifferenzsignal E) mehr Zeilen ausgegeben als mit dem zweiten Farbdifferenzsignal A, B oder C eingelesen. Dies bedeutet, daß dieselbe Zeile unter Umständen zweimal (oder auch mehrfach) am Ausgang 26 des Zeilenspeichers 12 benötigt wird und die Einschreibvorgänge in die Speicher demzufolge periodisch angehalten werden müssen. Der Generator 61 erzeugt deshalb auch noch ein Signal WEN zur Freigabe der Schreiberlaubnis und gibt dieses über eine (achte) Steuerleitung 80 an die Speichersteuerung 75 weiter. Die Steuerung der Teilbildspeicher 10, 11 und des Zeilenspeichers 12 ist im übrigen deren spezieller Bauart von Fall zu Fall anzupassen. Läßt sich beispielsweise die Leseadresse bei einem Speicher nicht auf den Anfang einer Zeile zurücksetzen, muß der zugehörige Lesezähler angehalten werden. In diesem Fall darf das Ausgangssignal des Bildspeichers bzw. der Teilbildspeicher 10, 11 nicht zur Verarbeitung genutzt werden. Die Signale WEN, MO und C1 werden im Generator 61 abhängig von einem Teilbildzähler 81 und einem Zeilenzähler 82 vorteilhaft aus einer in einer entsprechenden Speicheranordnung abgelegten Tabelle generiert. In Fig. 3 sind der Teilbildzähler 81 und der Zeilenzähler 82 symbolisch dargestellt und über eine Leitung 83 mit dem Generator 61 verbunden. Generator 61, Teilbildzähler 81 und Zeilenzähler 82 bilden in Fig. 3 eine mit 84 bezeichnete Einheit.

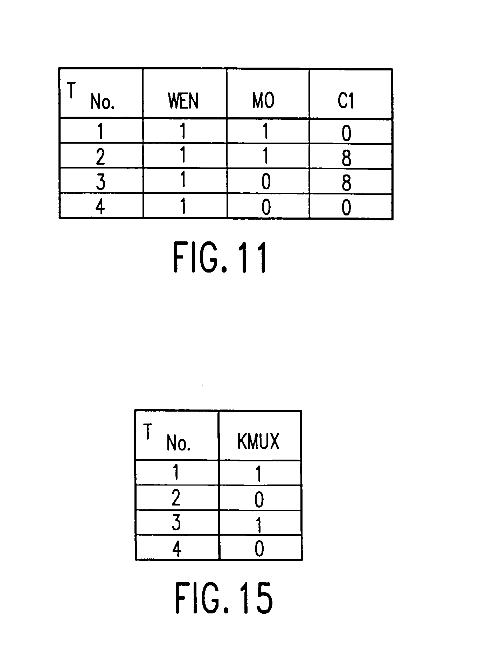

Die Fig. 10 und 11 zeigen Beispiele für derartige Tabellen, und zwar im Fall der Fig. 10 für einen vertikalen Bildformatfaktor von 4/3 und im Fall der Fig. 11 für einen Bildformatfaktor von 1, d.h. für unveränderte Bildgröße. In diesen Tabellen der Fig. 10 und 11 ist mit T die Teilbildnummer und mit Z die Zeilennummer bezeichnet, wobei letztere in der Darstellung Modulo 4 wiedergegeben ist. Im Gegensatz zu den voraufgehenden Ausführungen ist in den Tabellen nach Fig. 10 und 11 der Gewichtungsfaktor C1 nicht auf 1, sondern auf 8 normiert.

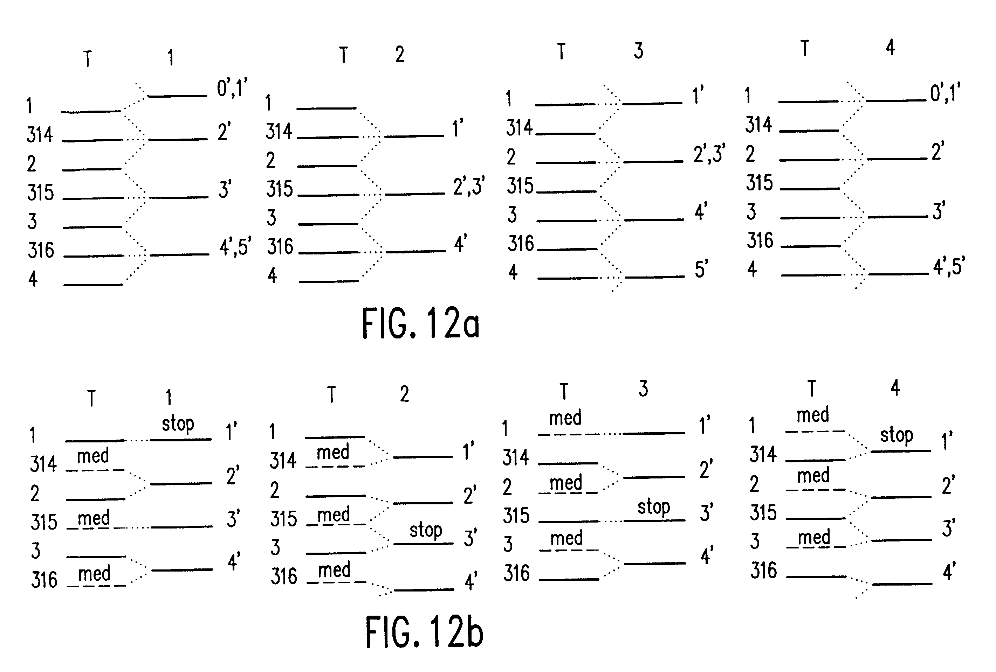

Nach den vorstehend beschriebenen Signalbearbeitungsschritten stehen zur weiteren Verarbeitung zu jedem Zeitpunkt je eine Zeile des zeitlich gemittelten, dritten Farbdifferenzsignals D und des örtlich hochaufgelösten, vierten Farbdifferenzsignals E zur Verfügung. In Fig. 12 sind dazu in der Übersicht über beide Interpolationsschaltungen 21 bzw. 23 die teilbildabhängigen Interpolationsschemata für den Fall symbolisch dargestellt, daß der vertikale Bildformatfaktor den Wert 4/3 annimmt. Fig. 12a) zeigt dabei das Interpolationsschema der ersten Interpolationsschaltung 21, Fig. 12b) das Interpolationsschema der zweiten Interpolationsschaltung 23. Für jede Interpolationsschaltung sind die Interpolationsschemata der vier Teilbilder T mit der Teilbildnummer 1 bis 4 wiedergegeben. In jedem dieser Teildiagramme sind in der linken Hälfte die Zeilen aus dem zweiten Farbdifferenzsignal dargestellt, die für die zeitliche Mittelung zur Verfügung stehen bzw. sich aus der Medianfilterung ergeben. In der rechten Hälfte jedes Teildiagramms der Fig. 12a) und b) sind die interpolierten Zeilen wiedergegeben, und zwar einschließlich der vertikalen Bildformatveränderung und vorzunehmender Änderungen des Zeilensprungrasters für das fünfte Farbdifferenzsignal UV100. Entsprechend ist auf der linken Seite jedes der Teildiagramme die Zeilennumerierung gemäß der fortlaufenden Vollbildzeilennumerierung angegeben, wohingegen auf der rechten Seite, jeweils mit Apostroph versehen, die Zeilennumerierung der interpolierten Zeilen wiedergegeben ist. Im Vergleich mit den Zeilen c) und d) der Tabelle nach Fig. 4 zeigen die linken Hälften der Teildiagramme der Fig. 12 nacheinander die Teilbilder TA, nochmals TA, TB und noch einmal TB, wohingegen die rechten Seiten der Teildiagramme der Fig. 12 die interpolierten Teilbilder TA, TAB, TB* und TBC wiedergeben.

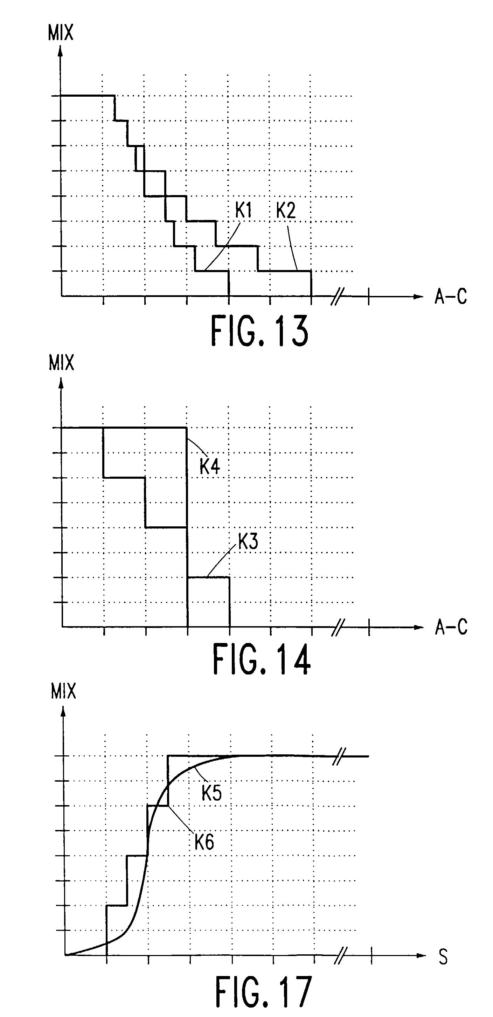

Die Umsteuerung zwischen den in Fig. 12a) einerseits und b) andererseits auf den rechten Seiten der Teildiagramme dargestellten Signalen bzw. deren Mischung bzw. Linearkombination erfolgt dann gemäß dem Mischungsfaktor MIX in der ersten Mischstufe 31. Fig. 3 zeigt dazu eine beispielhafte Ausbildung einer ersten Steuerstufe 85, die eine erste Subtraktionsstufe 86, eine Betragsbildungsstufe 87, eine erste Kennlinienstufe 88 sowie im vorliegenden Fall auch eine dritte Umschaltstufe 89 umfaßt. Die erste Subtraktionsstufe 86 weist einen mit dem Eingang 19 des Zeilenspeichers 12 verbundenen Subtrahendeneingang 90, einen mit dem Ausgang 26 des Zeilenspeichers 12 verbundenen Minuendeneingang 91 sowie einen Differenzausgang 92 auf. Mit dem Differenzausgang 92 der ersten Subtraktionsstufe 86 ist die Betragsbildungsstufe 87 verbunden, die wiederum mit der ersten Kennlinienstufe 88 verbunden ist. In der ersten Subtraktionsstufe 86 wird die Differenz der Signale A und C gebildet und der Betragsbildungsstufe 87 zugeführt. Der Betrag der genannten Differenz erscheint dann als Eingangssignal an der ersten Kennlinienstufe und adressiert eine hierin abgespeicherte, erste Zuordnungsfunktion, so daß zu jedem Wert des Betrags der Differenz der Signale A und C nach Maßgabe dieser ersten Zuordnungsfunktion bzw. einer durch sie gebildeten Kennlinie ein zugeordneter Wert eines Koeffizientensignals am Ausgang 93 der ersten Kennlinienstufe 88 abgegeben wird. Dieses Koeffizientensignal bildet den Mischungsfaktor MIX, der dem Koeffizientensignaleingang 35 der ersten Mischstufe 31 zugeleitet wird. Dabei dient die Differenzbildung zwischen den Signalen A und C zur Abschätzung der vertikalen Ortsfrequenz des Bildinhalts der übertragenen Farbdifferenzsignale. Der Verlauf der ersten Zuordnungsfunktion, auch als Umsteuerkennlinie bezeichnet, kann entsprechend dem subjektiven Bildeindruck aus dem fünften Farbdifferenzsignal UV100 angepaßt werden. Dazu sind in den Fig. 13 und 14 einige Beispiele K1, K2, K3 und K4 für mögliche Verläufe der ersten Zuordnungsfunktion wiedergegeben. Auf der Ordinate der Fig. 13 und 14 ist jeweils der Wert des Mischungsfaktors MIX, auf der Abszisse der Betrag der Differenz zwischen den Signalen A und C aufgetragen. Für den Bildeindruck optimale Kennlinien sind die Beispiele K1 und K2 in Fig. 13, wohingegen mit K3 in Fig. 14 eine vereinfachte Kennlinie dargestellt ist, die mit geringerem Schaltungsaufwand erzeugt werden kann. Zum Vergleich zeigt K4 eine "harte" Umschaltschwelle als erste Zuordnungsfunktion.

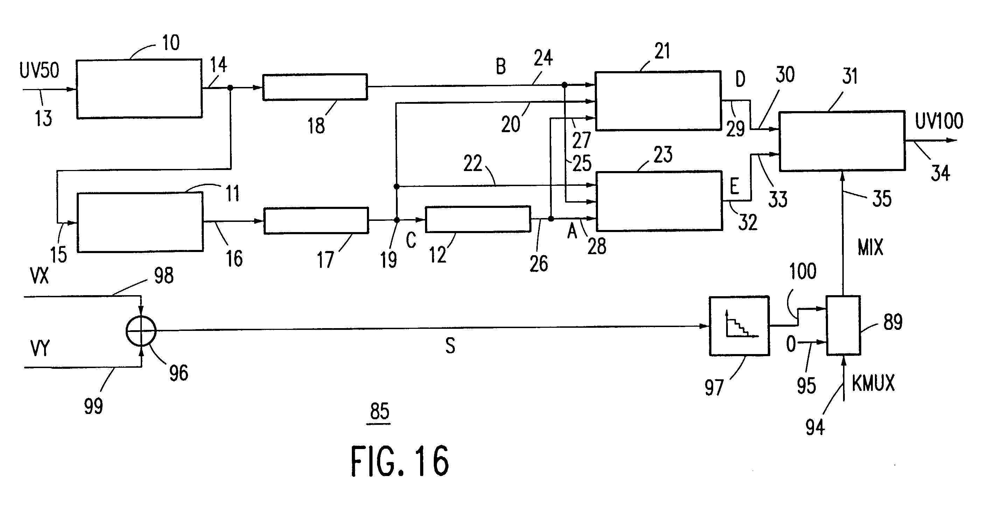

Die Umsteuerung bzw. Mischung bzw. Linearkombination der Signale D und E ist bevorzugt in Teilbildern mit zeitlicher Zwischenbildinterpolation anzuwenden; im dargestellten Beispiel findet jedoch eine solche zeitliche Zwischenbildinterpolation in den Teilbildern 1 und 3 nicht statt. Um mögliche schädliche Einflüsse der zeitlichen Mittelung für diese Teilbilder auszuschließen, kann die erste Steuerstufe 85 bzw. ihre Einwirkung auf den Umsteuervorgang in der ersten Mischstufe 31 während dieser Teilbilder abgeschaltet werden. Dazu dient die dritte Umschaltstufe 89, die über eine neunte Steuerleitung 94 ebenfalls vom Generator aus gesteuert wird, und zwar entsprechend den Vorgaben durch insbesondere den Teilbildzähler 81. Im genannten Beispiel wird während der Teilbilder 2 und 4, d. h. bei zeitlicher Zwischenbildinterpolation, über die dritte Umschaltstufe 89 eine Verbindung zwischen dem Ausgang 93 der ersten Kennlinienstufe 88 und dem Koeffizientensignaleingang 35 der ersten Mischstufe 31 hergestellt, so daß hier das Koeffizientensignal (Mischungsfaktor) MIX unverändert verfügbar ist. Während der Teilbilder 1 und 3 wird dagegen von der dritten Umschaltstufe 89 diese Verbindung unterbrochen und statt dessen als Mischungsfaktor MIX von einem entsprechenden Eingang 95 der dritten Umschaltstufe 89 ein fester Wert (0) als Mischungsfaktor MIX der ersten Mischstufe 31 zugeleitet. Das Signal auf der neunten Steuerleitung 94 ist in Fig. 3 als KMUX bezeichnet und für das beschriebene Beispiel in Fig. 15 tabellarisch dargestellt. Für den Fall einer senderseitigen Übertragung mit beispielsweise 25 Bewegungsphasen je Sekunde, d.h. einer Übertragung eines Kinofilms, sind die Werte für das Signal KMUX an die entsprechende Leuchtdichtesignalverarbeitung anzupassen.

Fig. 16 zeigt eine Abwandlung der Schaltungsanordnung nach Fig. 3 zur Durchführung einer Variante des erfindungsgemäßen Verfahrens, wobei einerseits eine vereinfachte Darstellung gewählt ist und andererseits die bereits beschriebenen Schaltungsteile wieder mit identischen Bezugszeichen versehen sind. Gegenüber Fig. 3 weicht bei der Schaltungsanordnung nach Fig. 16 der Aufbau der ersten Steuerstufe 85 ab, die jetzt eine dritte Additionsstufe 96 sowie eine zweite Kennlinienstufe 97 umfaßt. Der dritten Additionsstufe 96 wird an ihrem ersten Eingang 98 ein Signal VX für den Betrag der horizontalen Objektbewegung und an ihrem zweiten Eingang 99 ein Signal VY für den Betrag der vertikalen Objektbewegung zugeführt. Die Summe dieser Signale bildet eine Steuergröße S, die als Eingangssignal für die zweite Kennlinienstufe 97 herangezogen wird und darin Werte einer zweiten Zuordnungsfunktion adressiert, nach deren Maßgabe von der zweiten Kennlinienstufe an ihrem Ausgang 100 das Koeffizientensignal MIX abgegeben und wie in der Schaltungsanordnung nach Fig. 3 über die dritte Umschaltstufe 89 dem Koeffizientensignaleingang 35 der ersten Mischstufe 31 zugeführt wird. Die Verbindung zwischen dem Ausgang der dritten Additionsstufe 96 und dem Eingang der zweiten Kennlinienstufe 97 ist mit dem Bezugszeichen 101 versehen. Die Signale VX und VY werden von einer nicht dargestellten Signalverarbeitungsstufe zugeführt, von der das bewegungskompensierte Leuchtdichtesignal erzeugt wird.

Fig. 17 zeigt zwei Beispiele K5 und K6 für die Ausgestaltung der Kennlinien, d.h. der zweiten Zuordnungsfunktion, in der zweiten Kennlinienstufe 97, aufgetragen als Mischungsfaktor MIX über der als Steuergröße S fungierenden Summe der Signale VX und VY. Während das Kennlinienbeispiel K5 einen stetigen, idealen Verlauf darstellt, ist mit K6 ein vereinfachter, stufenförmiger Verlauf zur Verminderung des Schaltungsaufwandes für die zweite Kennlinienstufe 97 angegeben.

Das erfindungsgemäße Verfahren zur verbesserten Interpolation von Farbdifferenzsignalen für den Fall einer Bewegungskompensation der Leuchtdichtesignale ist insbesondere zur Anwendung bei der Wandlung von Fernsehsignalen aus dem 50 Hz-Teilbildraster in eine Darstellung mit einer Teilbildwiederholfrequenz von 100 Hz bzw. entsprechend bei einer Wandlung von 60 Hz in 120 Hz anwendbar. Durch Adaption an die vertikale Ortsfrequenz oder die örtliche Bewegung wird dabei zwischen zwei Filtern umgesteuert, die eine jeweils optimale Chrominanzinterpolation durchführen. Das Verfahren erweist sich insbesondere als vorteilhaft im Zusammenhang mit Techniken zur vertikalen Abtastratenkonversion, da für den Fall hoher vertikaler Ortsfrequenzen bzw. statischer Bildinhalte eine Interpolation im Vollbild, d.h. mit der maximal erzielbaren Auflösung, erfolgt. Vorteilhaft kann eine der beschriebenen Schaltungsanordnungen zur Durchführung des erfindungsgemäßen Verfahrens in einem Gerät zur Verarbeitung und/oder Wiedergabe eines Farbdifferenzsignale umfassenden Bildsignals eingesetzt werden.

**Patentansprüche**

1. Verfahren zur Interpolation von im Zeilensprungverfahren übertragenen Farbdifferenzsignalen, die sowohl einer Medianfilterung als auch einer Mittelung unterzogen werden, wobei zur Erzeugung eines Ausgangssignals zwischen der Medianfilterung und der Mittelung in Abhängigkeit erkannter Signalanteile umgesteuert wird, dadurch gekennzeichnet, daß

   - ein mit einer ersten Teilbildwiederholfrequenz zugeführtes erstes Farbdifferenzsignal durch Teilbildwiederholung in ein zweites Farbdifferenzsignal mit einer gegenüber der ersten Teilbildwiederholfrequenz verdoppelten zweiten Teilbildwiederholfrequenz überführt wird,
   - durch zeitliche Mittelung jeweils zweier aufeinanderfolgender Teilbilder aus dem zweiten Farbdifferenzsignal ein drittes, zeitlich gemitteltes Farbdifferenzsignal erzeugt wird,
   - durch örtlich hochaufgelöste Interpolation jeweils zweier aufeinanderfolgender Teilbilder aus dem zweiten Farbdifferenzsignal ein viertes, örtlich hochaufgelöstes Farbdifferenzsignal erzeugt wird,
   - ein fünftes auszugebendes Farbdifferenzsignal als Linearkombination des dritten und des vierten Farbdifferenzsignals mit bezüglich einer Konstanten zueinander komplementären Koeffizienten gebildet wird und
   - die Koeffizienten nach Maßgabe einer aus einem durch die Farbdifferenzsignale darstellbaren Bildinhalt ableitbaren vertikalen Ortsfrequenz oder einer lokalen Bewegungsgeschwindigkeit derart bestimmt werden, daß in der Linearkombination für hohe Bewegungsgeschwindigkeiten bzw. niedrige vertikale Ortsfrequenzen überwiegend das dritte und im umgekehrten Fall überwiegend das vierte Farbdifferenzsignal zur Bildung des fünften Farbdifferenzsignals herangezogen werden.

2. Verfahren nach Anspruch 1, dadurch gekennzeichnet, daß zur Bildung des dritten Farbdifferenzsignals bildpunktweise das zweite Farbdifferenzsignal aus zwei oder drei in der Bilddarstellung örtlich benachbarten Bildzeilen von jeweils zwei aufeinanderfolgenden Teilbildern mit für jedes Teilbild gleicher Gewichtung überlagert wird.

3. Verfahren nach Anspruch 1, dadurch gekennzeichnet, daß zur Bildung des vierten Farbdifferenzsignals bildpunktweise eine Medianfilterung des zweiten Farbdifferenzsignals aus drei in der Bilddarstellung örtlich benachbarten Bildzeilen von jeweils zwei aufeinanderfolgenden Teilbildern durchgeführt wird.

4. Verfahren nach Anspruch 3, dadurch gekennzeichnet, daß ein aus der Medianfilterung erhaltenes Signal zur Gewinnung des vierten Farbdifferenzsignals mit dem Signal wahlweise einer der beiden aus demselben Teilbild entnommenen Bildzeilen linear kombiniert wird, wobei die Gewichtung in dieser Linearkombination bildzeilen- und teilbildabhängig durch einen Bildformatfaktor bestimmt wird, gemäß dem eine vertikale Formatkonversion zwischen den mit dem ersten und dem vierten Farbdifferenzsignal darzustellenden Bildern vorgenommen werden soll.

5. Verfahren nach Anspruch 4, dadurch gekennzeichnet, daß das aus der Medianfilterung erhaltene Signal oder wahlweise für den Fall, daß die beiden Teilbilder aus derselben Bewegungsphase stammen, das Signal der mittleren der drei in der Bilddarstellung örtlich benachbarten Bildzeilen zur Gewinnung des vierten Farbdifferenzsignals herangezogen wird.

6. Verfahren nach einem der vorhergehenden Ansprüche, dadurch gekennzeichnet, daß zur Abschätzung der vertikalen Ortsfrequenz bildpunktweise der Absolutwert zweier benachbarter Bildzeilen eines Teilbildes bestimmt wird und daß die Werte der für die Bildung des fünften Farbdifferenzsignals aus dem dritten und dem vierten Farbdifferenzsignal verwendeten Koeffizienten aus diesem Absolutwert über eine vorgebbare erste Zuordnungsfunktion festgelegt werden.

7. Verfahren nach einem der vorhergehenden Ansprüche, dadurch gekennzeichnet, daß die Werte der für die Bildung des fünften Farbdifferenzsignals aus dem dritten und dem vierten Farbdifferenzsignal verwendeten Koeffizienten aus der lokalen Bewegungsgeschwindigkeit über eine vorgebbare zweite Zuordnungsfunktion festgelegt werden.

8. Schaltungsanordnung zum Durchführen eines Verfahrens zur Interpolation von im Zeilensprungverfahren übertragenen Farbdifferenzsignalen, die sowohl einer Medianfilterung als auch einer Mittelung unterzogen werden, wobei zur Erzeugung eines Ausganssignals zwischen der Medianfilterung und der Mittelung in Abhängigkeit erkannter Signalanteile umgesteuert wird, <u>gekennzeichnet durch</u>

- einen ersten Teilbildspeicher mit einem Eingang zum Zuleiten eines ersten Farbdifferenzsignals und einem Ausgang zum Abgeben eines zweiten Farbdiffernzsignals , welches durch Teilbildwiederholung mit einer gegenüber der Teilbildwiederholfrequenz des ersten Farbdifferenzsignals verdoppelten Teilbildwiederholfrequenz gebildet ist,
- einen zweiten Teilbildspeicher mit einem Eingang, der mit dem Ausgang des ersten Teilbildspeichers verbunden ist, und einem Ausgang zum Abgeben des um die Dauer eines Teilbildes verzögerten zweiten Farbdifferenzsignals,
- einen Zeilenspeicher, dessen Eingang mit dem Ausgang des zweiten Teilbildspeichers verbunden ist und an dessen Ausgang ein zusätzlich um eine Zeilendauer verzögertes zweites Farbdifferenzsignal abgegeben werden kann,
- eine erste Interpolationsschaltung mit drei Eingängen, die mit den Ausgängen des ersten Teilbildspeichers, des zweiten Teilbildspeichers bzw. des Zeilenspeichers verbunden sind, sowie mit einem Ausgang zum Abgeben eines dritten, durch zeitliche Mittelung jeweils zweier aufeinanderfolgender Teilbilder aus dem zweiten Farbdifferenzsignal gebildeten Farbdifferenzsignals,
- eine zweite Interpolationsschaltung mit drei Eingängen, die mit den Ausgängen des zweiten Teilbildspeichers, des ersten Teilbildspeichers bzw. des Zeilenspeichers verbunden sind, sowie mit einem Ausgang zum Abgeben eines vierten durch örtlich hochaufgelöste Interpolation jeweils zweier aufeinanderfolgender Teilbilder aus dem zweiten Farbdifferenzsignal erzeugten Farbdifferenzsignals,
- eine erste Mischstufe, deren erster Eingang mit dem Ausgang der ersten Interpolationsschaltung und deren zweiter Eingang mit dem Ausgang der zweiten Interpolationsschaltung verbunden ist und an deren Ausgang ein fünftes Farbdifferenzsignal, das als Linearkombination des dritten und des vierten Farbdifferenzsignals mit bezüglich einer Konstanten zueinander komplementären Koeffizienten gebildet ist, abgegriffen werden kann,
- eine erste Steuerstufe zum Steuern der ersten Mischstufe durch Bestimmung der Koeffizienten für die Bildung des fünften Farbdifferenzsignals und Ausgeben eines entsprechenden Koeffizientensignals.

9. Schaltungsanordnung nach Anspruch 8, <u>dadurch gekennzeichnet,</u> daß die erste Interpolationsschaltung umfaßt:

- eine erste Multiplikationsstufe, durch die ein ihrem Eingang zugeführtes Signal mit dem Faktor 0,5 multipliziert am Ausgang der ersten Interpolationsschaltung verfügbar ist,
- eine erste Additionsstufe, deren Ausgang mit dem Eingang der ersten Multiplikationsstufe verbunden ist, deren erster Eingang den ersten Eingang der ersten Interpolationsschaltung bildet und deren zweitem Eingang das zweite Farbdifferenzsignal vom zweiten oder vom dritten Eingang der ersten Interpolationsschaltung oder ein Mittelwert dieser beiden Signale zuleitbar ist.

10. Schaltungsanordnung nach Anspruch 8 oder 9, <u>dadurch gekennzeichnet,</u> daß die zweite Interpolationsschaltung umfaßt:

- ein Medianfilter, dessen Eingänge von den Eingängen der zweiten Interpolatiosschaltung gebildet sind und das zum Abgeben des jeweils mittleren der drei seinen Eingängen aktuell zugeführten Signalwerte an seinem Ausgang eingerichtet ist,
- eine erste Umschaltstufe zum wahlweisen Durchschalten des zweiten Farbdifferenzsignals vom Ausgang des Zeilenspeichers oder vom Ausgang des zweiten Teilbildspeichers an einen Ausgang der ersten Umschaltstufe,
- eine zweite Mischstufe, deren erster Eingang mit dem Ausgang des Medianfilters und deren zweiter Eingang mit dem Ausgang der ersten Umschaltstufe verbunden ist und deren Ausgang das vierte Farbdifferenzsignal entnehmbar ist, und
- eine zweite Steuerstufe zum Steuern der zweiten Mischstufe durch Bestimmung der Koeffizienten für die Bildung des vierten Farbdifferenzsignals.

11. Schaltungsanordnung nach Anspruch 10, <u>weiterhin gekennzeichnet</u> durch eine von der zweiten Steuerstufe gesteuerte zweite Umschaltstufe zum wahlweisen Durchschalten des zweiten Farbdifferenzsignals vom Ausgang des ersten Teilbildspeichers oder des Signals vom Ausgang des Medianfilters an den ersten Eingang der zweiten Mischstufe.

12. Schaltungsanordnung nach Anspruch 8, 9, 10 oder 11, <u>dadurch gekennzeichnet,</u> daß die erste Steuerstufe umfaßt:

- eine erste Subtraktionsstufe mit einem mit dem Eingang des Zeilenspeichers verbundenen Subtrahendeneingang, einem mit dem Ausgang des Zeilenspeichers verbundenen Minuendeneingang und einem Differenzausgang,

- eine mit dem Differenzausgang der ersten Subtraktionsstufe verbundene Betragsbildungsstufe zum Bereitstellen des Betragswertes des Signals am Differenzausgang der ersten Subtraktionsstufe, sowie

- eine erste Kennlinienstufe zum Erzeugen des Koeffizientensignals aus dem Betragswert nach Maßgabe der ersten Zuordnungsfunktion.

13. Schaltungsanordnung nach Anspruch 8, 9, 10 oder 11, dadurch gekennzeichnet, daß die erste Steuerstufe umfaßt:

- eine dritte Additionsstufe zum Verknüpfen eines Signals für den Betrag einer horizontalen, lokalen Objektbewegung mit einem Signal für den Betrag einer vertikalen, lokalen Objektbewegung und

- eine zweite Kennlinienstufe zum Erzeugen des Koeffizientensignals aus dem Betragswert nach Maßgabe der zweiten Zuordnungsfunktion.

14. Schaltungsanordnung nach Anspruch 12 oder 13, gekennzeichnet durch
eine dritte Umschaltstufe zum wahlweisen Zuführen des Koeffizientensignals von der ersten Steuerstufe oder zum Umsteuern der ersten Mischstufe in einen Betriebszustand, in dem das fünfte Farbdifferenzsignal mit dem vierten Farbdifferenzsignal übereinstimmt.

15. Gerät zur Verarbeitung und/oder Wiedergabe eines Farbdifferenzsignale umfassenden Bildsignals, gekennzeichnet durch
eine Schaltungsanordnung nach einem der Ansprüche 8 bis 14.

**Claims**

1. A method of interpolating interlaced color difference signals subjected to both a median filtering and an averaging operation, in which, for generating an output signal, a switch between the median filtering and the averaging operation is performed in dependence upon recognized signal components, characterized in that

- a second color difference signal is generated from a first color difference signal supplied at a first field repetition frequency by way of field repetition, the second color difference signal having a second field repetition frequency which is doubled with respect to the first field repetition frequency,

- a third, time-averaged color difference signal is generated from the second color difference signal by time-averaging of two consecutive fields,

- a fourth, spatially high-resolution color difference signal is generated from the second color difference signal by a spatially high-resolution interpolation of two consecutive fields,

- a fifth color difference signal to be supplied as a linear combination of the third and the fourth color difference signals is formed by means of coefficients which are complementary with respect to a constant, and

- in accordance with a vertical spatial frequency, which can be derived from picture contents representable by the color difference signals, or in accordance with a local rate of motion, the coefficients are determined in such a way that substantially the third color difference signal, and in the reverse case substantially the fourth color difference signal, are used for forming the fifth color difference signal in the linear combination in the case of rapid motion or low spatial frequencies.

2. A method as claimed in claim 1, characterized in that a pixel-by-pixel superimposition is performed of the second color difference signal of two or three picture lines of two consecutive fields, which lines are locally adjacent in the representation of the picture, at the same weighting for each field, to form the third color difference signal.

3. A method as claimed in claim 1, characterized in that a pixel-by-pixel median filtering is performed of the second color difference signal of three picture lines of two consecutive fields, which lines are locally adjacent in the representation of the picture, to form the fourth color difference signal.

4. A method as claimed in claim 3, characterized in that a signal, which is obtained from the median filtering operation for gaining the fourth color difference signal, is linearly combined with the signal of optionally one of the two picture lines taken from the same field, while the weighting in said linear combination is determined by a picture format factor in dependence upon the picture lines and the fields, in accordance with which factor a vertical format conversion between the pictures representing the first and the fourth color difference signal is to be performed.

5. A method as claimed in claim 4, characterized in that the signal obtained from the median filtering operation, or, optionally if the two fields originate from the same motion phase, the signal of the central picture line of the three picture lines which are locally adjacent in the representation of the picture, is used for gaining the fourth color difference signal.

6. A method as claimed in any one of the preceding claims, characterized in that, for estimating the vertical spatial frequency, the absolute value of two adjacent picture lines of a field is determined pixel by pixel, and in that the values of the coefficients, which are used for forming the fifth color difference signal from the third and the fourth color difference signal, are fixed from this absolute value via a predeterminable first assignment function.

7. A method as claimed in any one of the preceding claims, characterized in that the values of the coefficients, which are used for forming the fifth color difference signal from the third and the fourth color difference signal, are fixed from the local rate of motion via a predeterminable second assignment function.

8. A circuit arrangement for performing a method of interpolating interlaced color difference signals subjected to both a median filtering and an averaging operation, in which, for generating an output signal, a switch between the median filtering and the averaging operation is performed in dependence upon recognized signal components, characterized by

   - a first field memory having an input for applying a first color difference signal and an output for supplying a second color difference signal formed by field repetition at a field repetition frequency which is doubled with respect to the field repetition frequency of the first color difference signal,
   - a second field memory having an input which is connected to the output of the first field memory, and an output for supplying the second color difference signal which is delayed by one field period,
   - a line memory having an input which is connected to the output of the second field memory, and an output which can supply a second color difference signal which is delayed by an extra line period,
   - a first interpolation circuit having three inputs which are connected to the outputs of the first field memory, the second field memory and the line memory, respectively, and an output for supplying a third color difference signal formed from the second color difference signal by time-averaging of two consecutive fields,
   - a second interpolation circuit having three inputs which are connected to the outputs of the second field memory, the first field memory and the line memory, respectively, and an output for supplying a fourth color difference signal generated from the second color difference signal by spatially high-resolution interpolation of two consecutive fields,
   - a first mixer stage having a first input which is connected to the output of the first interpolation circuit, and a second input which is connected to the output of the second interpolation circuit, and an output which can supply a fifth color difference signal which is formed as a linear combination of the third and the fourth color difference signal by means of coefficients which are complementary with respect to a constant,
   - a first control stage for controlling the first mixer stage by determining the coefficients for forming the fifth color difference signal and for supplying a corresponding coefficient signal.

9. A circuit arrangement as claimed in claim 8, characterized in that the first interpolation circuit comprises:

   - a first multiplier stage for multiplying a signal applied to its input by a factor of 0.5 and making said signal available at the output of the first interpolation circuit,
   - a first adder stage having an output which is connected to the input of the first multiplier stage, and a first input which constitutes the first input of the first interpolation circuit, and a second input to which the second color difference signal from the second or the third input of the first interpolation circuit, or a mean value of said two signals, can be applied.

10. A circuit arrangement as claimed in claim 8 or 9, characterized in that the second interpolation circuit comprises:

   - a median filter having inputs constituted by the inputs of the second interpolation circuit and being adapted to supply, from its outputs, the central signal value of the three signal values currently applied to its inputs,
   - a first switching stage for optionally switching the second color difference signal from the output of the line memory or from the output of the second field memory to an output of the first switching stage,
   - a second mixer stage having a first input which is connected to the output of the median filter, and a second input which is connected to the output of the first switching stage, and an output from which the fourth color difference signal can be supplied, and
   - a second control stage for controlling the second mixer stage by determining the coefficients for forming the fourth color difference signal.

11. A circuit arrangement as claimed in claim 10, further characterized by a second switching stage controlled by the second control stage for optionally switching the second color difference signal from the output of the first field memory, or the signal from the output of the median filter, to the first input of the second mixer stage.

12. A circuit arrangement as claimed in claim 8, 9, 10 or 11, characterized in that the first control stage comprises:

- a first subtracter stage having a subtrahend input which is connected to the input of the line memory, a minuend input which is connected to the output of the line memory, and a difference output,
- a value-forming stage which is connected to the difference output of the first subtracter stage for making the value of the signal available at the difference output of the first subtracter stage, and
- a first characteristic-curve stage for generating the coefficient signal from said value in accordance with the first assignment function.

13. A circuit arrangement as claimed in claim 8, 9, 10 or 11, characterized in that the first control stage comprises:

- a third adder stage for combining a signal by the value of a horizontal, local object motion with a signal by the value of a vertical, local object motion, and
- a second characteristic-curve stage for generating the coefficient signal from said value in accordance with the second assignment function.

14. A circuit arrangement as claimed in claim 12 or 13, characterized by a third switching stage for optionally supplying the coefficient signal from the first control stage, or for switching the first mixer stage to an operating state in which the fifth color difference signal corresponds to the fourth color difference signal.

15. An apparatus for processing and/or displaying a picture signal comprising color difference signals, characterized by a circuit arrangement as claimed in any one of claims 8 to 14.

**Revendications**

1. Procédé d'interpolation de signaux de différence de couleur transmis dans un procédé d'entrelacement qui sont soumis à la fois à un filtrage de médiane et un calcul de moyenne, la commutation étant effectuée en vue de la production d'un signal de sortie entre le filtrage de médiane et le calcul de moyenne en fonction des composantes reconnues du signal, caractérisé en ce que :

- un premier signal de différence de couleur amené à une première fréquence de répétition des images partielles est transformé par répétition des images partielles en un deuxième signal de différence de couleur avec une deuxième fréquence de répétition des images partielles doublée par rapport à la première fréquence de répétition des images partielles,
- par calcul d'une moyenne temporelle de deux images partielles successives à partir du deuxième signal de différence de couleur est produit un troisième signal de différence de couleur en moyenne temporelle,
- par interpolation à haute résolution spatiale de deux images partielles successives à partir du deuxième signal de différence de couleur est produit un quatrième signal de différence de couleur à haute résolution spatiale,
- un cinquième signal de différence de couleur à émettre comme combinaison linéaire des troisième et quatrième signaux de différence de couleur est formé avec des coefficients complémentaires entre eux par rapport à une constante et
- les coefficients sont déterminés en fonction d'un contenu d'image à représenter par les signaux de différence de couleur d'une fréquence de lieu verticale à dériver ou d'une vitesse de mouvement spatiale de telle sorte que, dans la combinaison linéaire pour des vitesses de mouvement élevées ou des fréquences de lieu verticales minimes, c'est principalement le troisième signal de différence de couleur et, dans le cas inverse, principalement le quatrième signal de différence de couleur qui sont utilisés pour la formation du cinquième signal de différence de couleur.

2. Procédé selon la revendication 1, caractérisé en ce qu'en vue de la formation du troisième signal de couleur, le deuxième signal de différence de couleur à partir de deux ou trois lignes d'image voisines spatialement dans la représentation d'image est respectivement superposé point par point par deux images partielles successives respectives avec une pondération équivalente pour chaque image partielle.

3. Procédé selon la revendication 1, caractérisé en ce qu'en vue de la formation du quatrième signal de différence de couleur, un filtrage de médiane du deuxième signal de différence de couleur est effectué pixel par pixel à partir de trois lignes d'images voisines spatialement dans la représentation d'image de deux images partielles successives.

4. Procédé selon la revendication 3, caractérisé en ce qu'un signal obtenu à partir du filtrage de médiane est combiné linéairement en vue de la production du quatrième signal de différence de couleur avec le signal au choix d'une des deux lignes d'image prélevée de la même image partielle, la pondération dans cette combinaison linéaire étant déterminée en fonction des lignes d'image et des images partielles par un facteur de format d'image selon lequel doit être effectuée une conversion de format verticale entre les images représentant le premier signal de différence de couleur et le quatrième.

5. Procédé selon la revendication 4, caractérisé en ce que le signal obtenu à partir du filtrage de médiane ou, au choix dans le cas où les deux images partielles proviennent de la même phase de mouvement, le signal de la ligne d'image centrale des trois lignes d'image voisines spatialement dans la représentation d'image est utilisé en vue de la production du quatrième signal de différence de couleur.

6. Procédé selon l'une des revendications précédentes, caractérisé en ce qu'en vue de l'évaluation de la fréquence de lieu verticale, la valeur absolue de deux lignes d'image voisines d'une image partielle est déterminée pixel par pixel et que les valeurs des coefficients utilisés pour la formation du cinquième signal de différence de couleur à partir des troisième et quatrième signaux de différence de couleur sont déterminées à partir de cette valeur absolue par l'intermédiaire d'une première fonction d'affectation à déterminer.

7. Procédé selon l'une des revendications précédentes, caractérisé en ce que les valeurs des coefficients utilisés pour la formation du cinquième signal de différence de couleur à partir des troisième et quatrième signaux de différence de couleur sont déterminées à partir de la vitesse de mouvement spatiale par l'intermédiaire d'une deuxième fonction d'affectation à prédéfinir.

8. Circuit de mise en oeuvre d'un procédé d'interpolation de signaux de différence de couleur transmis dans le procédé d'entrelacement qui sont soumis à la fois à un filtrage de médiane et à un calcul de moyenne, la commutation étant effectuée en vue de la production d'un signal de sortie entre le filtrage de médiane et le calcul de moyenne en fonction des composantes reconnues du signal, caractérisé par :

- une première mémoire d'images partielles avec une entrée en vue d'amener un premier signal de différence de couleur et une sortie en vue de délivrer un deuxième signal de différence de couleur qui est formé par répétition des images partielles avec une fréquence de répétition des images partielles doublée par rapport à la fréquence de répétition des images partielles du premier signal de différence de couleur,

- une deuxième mémoire d'images partielles avec une entrée qui est reliée à la sortie de la première mémoire d'images partielles et une sortie en vue de délivrer le deuxième signal de différence de couleur retardé de la durée d'une image partielle,

- une mémoire de lignes dont l'entrée est reliée à la sortie de la deuxième mémoire d'images partielles et à la sortie duquel peut être délivré un deuxième signal de différence de couleur retardé en plus de la durée d'une ligne,

- un premier circuit d'interpolation avec trois entrées qui sont reliées aux sorties de la première mémoire d'images partielles, de la deuxième mémoire d'images partielles et de la mémoire de lignes ainsi qu'à une sortie en vue de délivrer un troisième signal de différence de couleur formé par calcul d'une moyenne temporelle de deux images partielles successives à partir du deuxième signal de différence de couleur,

- un deuxième circuit d'interpolation avec trois entrées qui sont reliées aux sorties de la deuxième mémoire d'images partielles, de la première mémoire d'images partielles et de la mémoire de lignes ainsi qu'avec une sortie en vue de délivrer un quatrième signal de différence de couleur produit par une interpolation à haute résolution spatiale de deux images partielles respectivement successives à partir du deuxième signal de différence de couleur,

- un premier étage de mélange dont la première entrée est reliée à la sortie du premier circuit d'interpolation et dont la deuxième entrée est reliée à la sortie du deuxième circuit d'interpolation et à la sortie duquel peut être prélevé un cinquième signal de différence de couleur qui est formé comme une combinaison linéaire des troisième et quatrième signaux de différence de couleur avec des coefficients complémentaires par rapport à une constante,

- un premier étage de commande en vue de la commande du premier étage de mélange par détermination des coefficients pour la formation du cinquième signal de différence de couleur et la délivrance d'un signal de coefficient correspondant.

9. Circuit selon la revendication 8, caractérisé en ce que le premier circuit d'interpolation comprend :

- un premier étage multiplicateur par lequel un signal amené à son entrée est disponible après multiplication par un facteur de 0,5 à la sortie du premier circuit d'interpolation,
- un premier étage d'addition dont la sortie est reliée à l'entrée du premier étage de multiplication dont la première entrée forme la première entrée du premier circuit d'interpolation et à la deuxième entrée duquel le deuxième signal de différence de couleur peut être amené par les deuxième ou troisième entrées du premier circuit d'interpolation ou une valeur moyenne de ces deux signaux.

10. Circuit selon l'une des revendications 8 ou 9, caractérisé en ce

que le deuxième circuit d'interpolation comprend :

- un filtrage de médiane dont les entrées sont formées par les entrées du deuxième circuit d'interpolation et qui est conçu pour la délivrance de la valeur de signal moyenne des trois valeurs de signal amenées actuellement à ses trois entrées à sa sortie,
- un premier étage de commutation en vue de la commutation optionnelle du deuxième signal de différence de couleur par la sortie de la mémoire de lignes ou par la sortie de la deuxième mémoire d'images partielles à une sortie du premier étage de commutation,
- un deuxième étage de mélange dont la première entrée est reliée à la sortie du filtre de médiane et la deuxième entrée à la sortie du premier étage de commutation et à la sortie duquel peut être prélevé le quatrième signal de différence de couleur, et
- un deuxième étage de commande en vue de la commande du deuxième étage de mélange par détermination des coefficients pour la formation du quatrième signal de différence de couleur.

11. Circuit selon la revendication 10, caractérisé par ailleurs

par un deuxième étage de commutation commandé par le deuxième étage de commande en vue de la commutation optionnelle du deuxième signal de différence de couleur par la sortie de la première mémoire d'images partielles ou du signal de la sortie du filtre de médiane à la première entrée du deuxième étage de mélange.

12. Circuit selon l'une des revendications 8, 9, 10 ou 11, caractérisé en ce

que le premier étage de commande comprend :

- un premier étage de soustraction avec une entrée du terme à soustraire reliée à l'entrée de la mémoire de ligne, une entrée du terme dont on soustrait reliée à la sortie de la mémoire de ligne et une sortie de différence,
- un étage de formation de valeur relié à la sortie de différence du premier étage de soustraction en vue de fournir la valeur absolue du signal à la sortie de différence du premier étage de soustraction et
- un premier étage de caractéristique en vue de la production du signal de coefficient à partir de la valeur absolue en fonction de la première fonction d'affectation.

13. Circuit selon l'une des revendications 8, 9, 10 ou 11, caractérisé en ce

que le premier étage de commande comprend :

- un troisième étage d'addition en vue de la liaison d'un signal pour la valeur d'un mouvement spatial horizontal de l'objet avec un signal pour la valeur d'un mouvement local vertical de l'objet et
- un deuxième étage de caractéristiques en vue de la production du signal de coefficient à partir de la valeur absolue selon la deuxième fonction d'affectation.

14. Circuit selon l'une des revendications 12 ou 13, caractérisé par

un troisième étage de commutation en vue de l'alimentation optionnelle du signal de coefficient par le premier étage de commande ou en vue de la commutation du premier étage de mélange dans un état de fonctionnement dans lequel le cinquième signal de différence de couleur correspond au quatrième signal de différence de couleur.

15. Appareil en vue du traitement et/ou de la reproduction d'un signal d'image comprenant des signaux de différence de couleur, caractérisé par

un circuit selon l'une des revendications 8 à 14.

FIG. 1a Y(1.)

FIG. 1b Y(2.)

FIG. 1c Y(3.)

FIG. 1d C(1.)

FIG. 1e C(2.)

FIG. 1f C(3.)

FIG. 1g Y+C(2.)

FIG. 2a Y(1.)

FIG. 2b Y(2.)

FIG. 2c Y(3.)

FIG. 2d C(1.)

FIG. 2e C(2.)

FIG. 2f C(3.)

FIG. 2g

FIG. 3

| | TA | TB | | TC | | TD |
|---|---|---|---|---|---|---|
| a) | TA | TB | | TC | | TD |
| b) | TA | TA | TB | TB | TC | TC |
| c) | TZ | TZ | TA | TA | TB | TB |
| d) | TZ* | TZA | TA | TAB | TB* | TBC |
| e) | 3 | 4 | 1 | 2 | 3 | 4 |

## FIG. 4

| T No. | $Z_{mod4}$ | WEN | MO | C1 |
|---|---|---|---|---|
| 1 | 1 | 0 | 0 | 0 |
| | 2 | 1 | 0 | 4 |
| | 3 | 1 | 0 | 8 |
| | 0 | 1 | 1 | 4 |
| 2 | 1 | 1 | 1 | 6 |
| | 2 | 1 | 1 | 2 |
| | 3 | 0 | 0 | 2 |
| | 0 | 1 | 0 | 6 |
| 3 | 1 | 1 | 0 | 8 |
| | 2 | 1 | 1 | 4 |
| | 3 | 0 | 0 | 0 |
| | 0 | 1 | 0 | 4 |
| 4 | 1 | 0 | 0 | 2 |
| | 2 | 1 | 0 | 6 |
| | 3 | 1 | 1 | 6 |
| | 0 | 1 | 1 | 2 |

## FIG. 10

FIG.5a

FIG.5b

FIG.5c

FIG.6

FIG. 7

FIG. 8

FIG. 9

| T No. | WEN | MO | C1 |
|-------|-----|-----|-----|
| 1 | 1 | 1 | 0 |
| 2 | 1 | 1 | 8 |
| 3 | 1 | 0 | 8 |
| 4 | 1 | 0 | 0 |

FIG. 11

| T No. | KMUX |
|-------|------|
| 1 | 1 |
| 2 | 0 |
| 3 | 1 |
| 4 | 0 |

FIG. 15

FIG. 12a

FIG. 12b

FIG. 13

FIG. 14

FIG. 17

FIG. 16

85